(19) Europäisches Patentamt
European Patent Office
Office européen des brevets

(11) **EP 4 708 022 A1**

(12) **EUROPEAN PATENT APPLICATION**
published in accordance with Art. 153(4) EPC

(43) Date of publication:
**11.03.2026 Bulletin 2026/11**

(21) Application number: **25757696.7**

(22) Date of filing: **18.02.2025**

(51) International Patent Classification (IPC):
*G06F 3/14* (2006.01)

(52) Cooperative Patent Classification (CPC):
**B60K 35/22; B60K 35/28; G06F 3/14**

(86) International application number:
**PCT/CN2025/077736**

(87) International publication number:
**WO 2025/176102 (28.08.2025 Gazette 2025/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.02.2024 CN 202410192130**

(71) Applicant: **Huawei Technologies Co., Ltd.**
**Shenzhen, Guangdong 518129 (CN)**

(72) Inventors:
• YAO, Zhuxi
**Shenzhen, Guangdong 518129 (CN)**
• YANG, Weitun
**Shenzhen, Guangdong 518129 (CN)**
• CHEN, Jiayu
**Shenzhen, Guangdong 518129 (CN)**
• LIAN, Hao
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **DISPLAY METHOD, DISPLAY APPARATUS, AND ELECTRONIC DEVICE**

(57) This application provides a display method, a display apparatus, and an electronic device. The method is applied to the electronic device, and includes: predicting first information, where the first information is information at a first moment, and the first information includes at least one of the following: an acceleration of the electronic device and an angular velocity of the electronic device; and displaying first content at the first moment based on the first information. The display method, the display apparatus, and the electronic device in this application can effectively alleviate motion sickness of users and provide personalized motion sickness alleviation services for the users based on individual differences of the users.

```
┌─────────────────────────────────────┐
│ S1401: Predict first information     │
└─────────────────────────────────────┘
                   │
                   ▼
┌─────────────────────────────────────┐
│ S1402: Display first content at a    │
│ first moment based on the first      │
│ information                          │
└─────────────────────────────────────┘
```

FIG. 14

## Description

This application claims priority to Chinese Patent Application No. 202410192130.3, filed with the China National Intellectual Property Administration on February 20, 2024 and entitled "DISPLAY METHOD, DISPLAY APPARATUS, AND ELECTRONIC DEVICE", which is incorporated herein by reference in its entirety.

## TECHNICAL FIELD

This application relates to the field of electronic devices, and more specifically, to a display method, a display apparatus, and an electronic device.

## BACKGROUND

With development of science and technologies, vehicles can carry multiple screens and provide various functions such as navigation, entertainment, and leisure to improve driving and riding experience of users. However, passengers are prone to car sickness from watching a screen during traveling of a head unit, affecting user experience. In addition, different users may be in varying personal conditions, resulting in different car sickness levels in a same driving scenario.

Therefore, how to effectively alleviate motion sickness of users and provide personalized motion sickness alleviation services for the users based on individual differences of the users is a current problem to be urgently resolved.

## SUMMARY

This application provides a display method, a display apparatus, and an electronic device. The method can effectively alleviate motion sickness of users and provide personalized motion sickness alleviation services for the users based on individual differences of the users.

According to a first aspect, a display method is provided, and the method is applied to an electronic device, and includes: predicting first information, where the first information is information at a first moment, and the first information includes at least one of the following: an acceleration of the electronic device and an angular velocity of the electronic device; and displaying first content at the first moment based on the first information.

For example, the electronic device may be a vehicle including a display device, and the first content may be visual anti-motion sickness content.

Based on the foregoing solution, an acceleration of a vehicle and/or an angular velocity of the vehicle at a future moment may be predicted, and visual anti-motion sickness content with a low delay or even without a delay is provided for a user, to reduce a conflict between a visual perception result and a vestibular perception result, and alleviate car sickness of the user.

With reference to the first aspect, in some implementations of the first aspect, displaying the first content at the first moment based on the first information includes: determining a second moment based on a first delay; outputting the first information at the second moment; and after the first delay, displaying the first content at the first moment based on the first information, where the second moment is before the first moment.

It should be noted that a specific system delay exists before the electronic device finally displays the visual anti-motion sickness content to the user. The system delay includes but is not limited to time consumed for data transmission between domains carried by the electronic device, time consumed for data processing by each module, and the like. The second moment may be a moment at which data is output. The first moment is a moment at which the first content is displayed. The first delay is the system delay. Because of existence of the system delay, when the first information is output at the second moment, the first content is displayed only after the first delay (system delay) elapses. It can be learned that, due to the system delay, the first information is output in advance, so that the visual anti-motion sickness content with a low delay or even without a delay can be provided for the user.

With reference to the first aspect, in some implementations of the first aspect, before predicting the first information, the method further includes: obtaining second information, where the second information is information at a third moment, the third moment is before the first moment, and the second information includes at least one of the following: mass of the electronic device, an opening of a pedal of the electronic device, a speed of the electronic device, a road condition parameter, an angle of a steering wheel of the electronic device, and an angular velocity of the steering wheel of the electronic device.

It should be noted that related information needs to be obtained before the first information at the first moment is predicted.

With reference to the first aspect, in some implementations of the first aspect, when the first information is the acceleration of the electronic device, predicting the first information includes: predicting the acceleration of the electronic device based on the mass of the electronic device, the opening of the pedal of the electronic device, the speed of the electronic device, and the road condition parameter.

With reference to the first aspect, in some implementations of the first aspect, when the first information is the angular velocity of the electronic device, predicting the first information includes: predicting the angular velocity of the electronic device based on the angle of the steering wheel of the electronic device or the angular velocity of the steering wheel of the electronic device.

For example, a torque of the vehicle may be calculated based on an opening of a pedal of the vehicle and a speed of the vehicle, and the torque of the vehicle affects power of the vehicle. Then, an acceleration of the vehicle at a moment is determined based on mass of the vehicle and a road condition parameter, and an angular velocity of the vehicle at a moment is determined based on an angular velocity of a steering wheel of the vehicle or an angular velocity of a steering wheel of the vehicle.

With reference to the first aspect, in some implementations of the first aspect, before displaying the first content based on the first information, the method further includes: determining a display manner of the first content based on the first information, where the display manner of the first content includes: a movement direction of the first content and a speed change characteristic of the first content.

Based on the foregoing solution, to achieve a better display effect of the visual anti-motion sickness content, a display manner of the visual anti-motion sickness content may be adjusted. A movement direction and a speed change characteristic of the visual anti-motion sickness content on the display device may be adjusted based on a predicted acceleration of the vehicle and/or a predicted angular velocity of the vehicle.

With reference to the first aspect, in some implementations of the first aspect, determining the display manner of the first content based on the first information includes: when the acceleration of the electronic device and the angular velocity of the electronic device do not meet a preset condition, determining that the first content is stationary.

For example, when the acceleration of the vehicle and the angular velocity of the vehicle are less than a first threshold, the vehicle is stationary or travels at a constant/nearly constant speed in a travel direction of the vehicle. In this case, it is determined that the visual anti-motion sickness content remains stationary. When the acceleration of the electronic device and the angular velocity of the electronic device do not meet the preset condition, the vestibular system of the user cannot perceive acceleration, deceleration, or turning of the vehicle, but the vestibular system of the user considers that the vehicle is stationary or is traveling at a constant speed. In this case, the visual anti-motion sickness content is also stationary.

With reference to the first aspect, in some implementations of the first aspect, determining the display manner of the first content based on the first information includes: when the acceleration of the electronic device meets a preset condition, determining that the movement direction of the first content is expanding toward an edge or contracting toward a center, where the speed change characteristic of the first content is related to the acceleration of the electronic device.

For example, that the acceleration of the electronic device meets the preset condition may be understood as that the acceleration of the electronic device or an absolute value of the acceleration reaches a threshold that can be perceived by the user. This includes two cases: The vehicle accelerates, and the vehicle decelerates. When an acceleration of the vehicle during acceleration meets the preset condition, a movement direction of the visual anti-motion sickness content is expanding toward an edge; or when an acceleration of the vehicle during deceleration meets the preset condition, a movement speed of the visual anti-motion sickness content is contracting toward a center.

With reference to the first aspect, in some implementations of the first aspect, determining the display manner of the first content based on the first information includes: when the angular velocity of the electronic device meets a preset condition, determining that the movement direction of the first content is opposite to a motion direction of the electronic device, where the speed change characteristic of the first content is related to the angular velocity of the electronic device.

For example, that the angular velocity of the electronic device meets the preset condition may be understood as that the angular velocity of the electronic device reaches a threshold that can be perceived by the user. When the angular velocity of the electronic device meets the preset condition, the vestibular system of the user may perceive turning of the vehicle, and move to a direction opposite to a turning direction of the vehicle based on the visual anti-motion sickness content, to provide a visual prompt for the user that the vehicle is turning. In addition, as the angular velocity of the vehicle increases, a movement speed of the visual anti-motion sickness content may also increase.

With reference to the first aspect, in some implementations of the first aspect, the method further includes: adjusting the speed change characteristic of the first content based on a first parameter, where the first parameter includes at least one of the following: a user characteristic, a user status, and a motion status of the electronic device.

For example, the user characteristic may be understood as motion sickness susceptibility of the user, the user status may be understood as a current car sickness level of the user, and the motion status of the electronic device may be understood as a traveling speed of the vehicle. For example, when the user has high motion sickness susceptibility, a change rate of the movement speed of the visual anti-motion sickness content may be reduced; or when the current car sickness level of the user increases, a change rate of the movement speed of the visual anti-motion sickness content may be reduced.

Based on the foregoing solution, a speed change characteristic of the visual anti-motion sickness content may be adjusted based on the user characteristic, the user status, and the motion status of the electronic device, so that an anti-motion sickness effect of the visual anti-motion sickness content can be personalized to adapt to different users.

With reference to the first aspect, in some implementations of the first aspect, the method further includes: adjusting the preset condition based on the first parameter, where the first parameter includes at least one of the following: the user characteristic, the user status, and the motion status of the electronic device.

For example, in case of higher motion sickness susceptibility or a higher current car sickness level of the user, a trigger threshold may be reduced. In addition, the trigger threshold may be adjusted based on the motion status of the vehicle. For example, a higher speed of the vehicle indicates a higher vibration frequency of the vehicle and a higher threshold for perceiving an acceleration of the vehicle by the user. In this case, the trigger threshold may be increased.

Based on the foregoing solution, the trigger threshold of the user may be adjusted based on the user characteristic, the user status, and the motion status of the electronic device, so that the anti-motion sickness effect of the visual anti-motion sickness content can be personalized to adapt to different users.

With reference to the first aspect, in some implementations of the first aspect, before displaying the first content based on the first information, the method further includes: determining a display area of the first content based on either of the first parameter and a second parameter; and/or determining a display position of the first content based on either of the first parameter and the second parameter, where the first parameter includes at least one of the following: the user characteristic, the user status, and the motion status of the electronic device; and the second parameter is a relative relationship between a screen of the electronic device and a retina of a user.

In the foregoing solution, the display area of the first content may be adjusted based on the user characteristic, the user status, the motion status of the electronic device, and the relative relationship between the screen of the electronic device and the retina of the user; or the display position of the first content may be adjusted based on the user characteristic, the user status, the motion status of the electronic device, and the relative relationship between the screen of the electronic device and the retina of the user, so that the anti-motion sickness effect of the visual anti-motion sickness content can be personalized to adapt to different users.

According to a second aspect, a display apparatus is provided, where the apparatus includes a processing unit, the processing unit is configured to predict first information, the first information is information at a first moment, and the first information includes at least one of the following: an acceleration of the apparatus and an angular velocity of the apparatus; and the processing unit is further configured to display first content at the first moment based on the first information.

With reference to the second aspect, in some implementations of the second aspect, the processing unit is specifically configured to: determine a second moment based on a first delay; output the first information at the second moment; and after the first delay, display the first content at the first moment based on the first information, where the second moment is before the first moment.

With reference to the second aspect, in some implementations of the second aspect, the processing unit is further configured to obtain second information, where the second information is information at a third moment, the third moment is before the first moment, and the second information includes at least one of the following: mass of the apparatus, an opening of a pedal of the apparatus, a speed of the apparatus, a road condition parameter, an angle of a steering wheel of the apparatus, and an angular velocity of the steering wheel of the apparatus.

With reference to the second aspect, in some implementations of the second aspect, when the first information is the acceleration of the apparatus, the processing unit is specifically configured to predict the acceleration of the apparatus based on the mass of the apparatus, the opening of the pedal of the apparatus, the speed of the apparatus, and the road condition parameter.

With reference to the second aspect, in some implementations of the second aspect, when the first information is the angular velocity of the apparatus, the processing unit is specifically configured to predict the angular velocity of the apparatus based on the angle of the steering wheel of the apparatus or the angular velocity of the steering wheel of the apparatus.

With reference to the second aspect, in some implementations of the second aspect, the processing unit is further configured to determine a display manner of the first content based on the first information, where the display manner of the first content includes: a movement direction of the first content and a speed change characteristic of the first content.

With reference to the second aspect, in some implementations of the second aspect, the processing unit is specifically configured to: when the acceleration of the apparatus and the angular velocity of the apparatus do not meet a preset condition, determine that the first content is stationary.

With reference to the second aspect, in some implementations of the second aspect, the processing unit is specifically configured to: when the acceleration of the apparatus meets a preset condition, determine that the movement direction of the first content is expanding toward an edge or contracting toward a center, where the speed change characteristic of the first content is related to the acceleration of the apparatus.

With reference to the second aspect, in some implementations of the second aspect, the processing unit is specifically configured to: when the angular velocity of the apparatus meets a preset condition, determine that the movement direction of the first content is opposite to a motion direction of the apparatus, where the speed change characteristic of the first content is related to the angular velocity of the apparatus.

With reference to the second aspect, in some implementations of the second aspect, the processing unit is further configured to adjust the speed change characteristic of the first content based on a first parameter, where the first parameter includes at least one of the following: a user characteristic, a user status, and a motion status of the apparatus.

With reference to the second aspect, in some implementations of the second aspect, the processing unit is further configured to adjust the preset condition based on the first parameter, where the first parameter includes at least one of the following: the user characteristic, the user status, and the motion status of the apparatus.

With reference to the second aspect, in some implementations of the second aspect, the processing unit is further configured to: determine a display area of the first content based on either of the first parameter and a second parameter; and/or determine a display position of the first content based on either of the first parameter and the second parameter, where the first parameter includes at least one of the following: the user characteristic, the user status, and the motion status of the apparatus.

According to a third aspect, an electronic device is provided, where the electronic device may be configured to perform the method according to the first aspect and any one of the possible implementations of the first aspect.

According to a fourth aspect, a display apparatus is provided, including a processor coupled to a memory, where the memory is configured to store a computer program, and the processor is configured to run the computer program, to cause the display apparatus to perform the method according to the first aspect and any one of the possible implementations of the first aspect.

With reference to the fourth aspect, in some implementations of the fourth aspect, the display apparatus further includes one or two of the memory and a transceiver, and the transceiver is configured to receive a signal and/or send a signal.

According to a fifth aspect, a computer-readable storage medium is provided, where the computer-readable storage medium stores a computer program, and when the computer program is executed by a computer, the computer is caused to perform the method according to the first aspect and any one of the possible implementations of the first aspect.

According to a sixth aspect, a computer program product including instructions is provided, where when the computer program product runs on a computer, the computer is caused to perform the method according to the first aspect and any one of the possible implementations of the first aspect.

According to a seventh aspect, a chip is provided, where the chip includes a processor and a data interface, and the processor reads, through the data interface, instructions stored in a memory, to perform the method according to the first aspect and any one of the possible implementations of the first aspect.

With reference to the seventh aspect, in a possible implementation, the processor is coupled to the memory through an interface.

With reference to the seventh aspect, in a possible implementation, the chip system further includes the memory, and the memory stores the computer program or the computer instructions.

## BRIEF DESCRIPTION OF DRAWINGS

FIG. 1 is a diagram of an application scenario of a display method according to an embodiment of this application;
FIG. 2 is a schematic flowchart of a display method according to an embodiment of this application;
FIG. 3 is a schematic flowchart of a display method according to an embodiment of this application;
FIG. 4 is a schematic flowchart of obtaining an acceleration of a vehicle according to an embodiment of this application;
FIG. 5 is a diagram of time synchronization of motion information of a vehicle according to an embodiment of this application;
FIG. 6 is a diagram of time synchronization of motion information of a vehicle according to an embodiment of this application;
FIG. 7 is a diagram of displaying visual anti-motion sickness content according to an embodiment of this application;
FIG. 8 is a diagram of displaying visual anti-motion sickness content according to an embodiment of this application;
FIG. 9 is a flowchart in which visual anti-motion sickness content changes with an acceleration of a vehicle and an angular velocity of the vehicle according to an embodiment of this application;
FIG. 10 is a diagram of a scenario according to an embodiment of this application;
FIG. 11 is a diagram of a scenario according to an embodiment of this application;
FIG. 12 is a diagram of a scenario according to an embodiment of this application;
FIG. 13 is a diagram of a scenario according to an embodiment of this application;
FIG. 14 is a schematic flowchart of a display method according to an embodiment of this application;
FIG. 15 is a block diagram of a display apparatus according to an embodiment of this application; and

FIG. 16 is a block diagram of a display apparatus according to an embodiment of this application.

## DESCRIPTION OF EMBODIMENTS

The following describes technical solutions of this application with reference to accompanying drawings.

For ease of understanding, technical terms that may be used in this application are first described.

### Car sickness

Car sickness, a type of motion sickness (motion sickness), is a syndrome caused by physical and/or visual motion.

### Motion sickness susceptibility

Generally, it refers to a degree of susceptibility of a user to motion sickness, has a significant individual difference, and is related to a plurality of factors. In this application, it also refers to a degree of susceptibility of a user to motion sickness in a current condition. For example, when the user is in a poor condition, the user is more likely to get motion sickness. In this case, the user is highly susceptible to motion sickness.

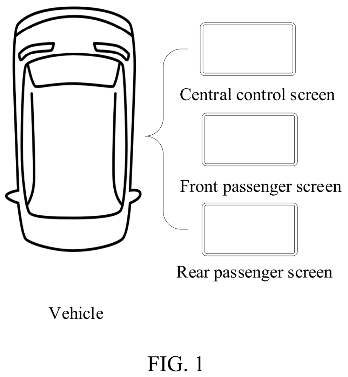

FIG. 1 shows a scenario to which a display method provided in this application is applicable. For example, a plurality of screens may be carried in a vehicle, including a central control screen, a front passenger screen, a rear seat screen, a laser curtain screen, a head-up display (head-up display, HUD), a screen of a mobile terminal device, and the like. The mobile terminal may join, by using a communication technology such as Maglink (Maglink, M-link), a network in which a preset screen like the central control screen, the front passenger screen, the rear seat screen, the laser curtain screen, or the HUD of the vehicle is located, to implement communication between the screen of the mobile terminal device and the preset screen. A user can further observe a virtual screen in the vehicle by using a virtual reality (virtual reality, VR) technology. According to the display method provided in this application, visual anti-motion sickness content is displayed on a screen, to alleviate a car sickness state of the user and provide good driving and riding experience for the user.

Motion sickness (for example, car sickness) is a state that a user frequently experience while riding in a vehicle, and a visual-vestibular conflict is a main cause of motion sickness induced when the user watches a screen in the vehicle. Specifically, the vestibular system may be used to obtain acceleration changes on a front-rear axis, a left-right axis, and an upper-lower axis, which is generated when the vehicle accelerates, decelerates, turns, or experiences jolts, and perceive that the user is currently in motion. In contrast, the user may perceive, by visual watching the screen, that the user is relatively stationary. Because the vestibular system perceives that the user is currently in motion, but visual perception indicates that the user is currently relatively stationary, different results obtained in the two perception manners conflict, causing the user to have a motion sickness symptom.

To alleviate the motion sickness symptom of the user, a manner of displaying a moving object to the user may be used. For example, a virtual moving object is displayed by using VR glasses, or a traveling picture of the vehicle is synchronously displayed on the screen. However, these methods have the following problems:

**First, there is a delay in displaying a moving object.**

For example, during motion of the vehicle, a sensor obtains motion information and may report the motion information to a vehicle domain controller (Vehicle Domain Controller, VDC), the VDC transfers processed motion information to a vehicle intranet unit (vehicle intranet unit, VIU), the VIU transfers processed motion information to a cockpit domain controller (Cockpit Domain Controller, CDC), and the CDC may parse processed motion data. The CDC displays and renders parsed motion data, and an end user can obtain rendered data. A noticeable delay exists in a process from vehicle motion to obtaining the rendered data by the end user, which prevents the user to obtain the rendered data in real time. For example, at a moment t-1, the vehicle goes straight, and the vestibular system of the user perceives that the vehicle is going straight; at a moment t, the vehicle turns left, and the vestibular system of the user perceives that the vehicle is turning left, but visually obtained prompt information indicates that the vehicle is going straight; and at a moment t+1, the vehicle turns right, and the vestibular system of the user perceives that the vehicle is turning right, and visually obtained prompt information indicates that the vehicle is turning left. It is clear that a good anti-motion sickness effect cannot be produced due to a delay.

**Second, a conflict exists between a visual perception result and a vestibular perception result.**

For example, a conflict exists between a visual perception result and a vestibular perception result when the vehicle decelerates or maintains a constant speed. It should be noted that a motion direction perceived by the vestibular system is consistent with an acceleration direction during motion of the vehicle, and a visually perceived motion direction is consistent with a speed direction during motion of the vehicle. When the vehicle decelerates, the acceleration direction of the vehicle is opposite to the motion direction, and the motion direction perceived by the vestibular system is opposite to the visually perceived motion direction, resulting in a conflict between a visual perception result and a vestibular perception result. When the vehicle maintains a constant speed, an acceleration of the vehicle is 0, the vestibular system perceives that the vehicle is relatively stationary and a speed direction of the vehicle is forward, and visual perception indicates the vehicle moves forward, also resulting in a conflict between a visual perception result and a vestibular perception result.

For example, the vehicle presents a same speed change in different speed scenarios, also resulting in a conflict between a visual perception result and a vestibular perception result. When the vehicle accelerates from 40 kph to 60 kph, there is a speed change of 20 kph. In this case, an acceleration perceived by the vestibular system is a physical acceleration, which may be understood as a difference of the speed change, that is, 20 kph; and a visually perceived acceleration is a result obtained by dividing the difference of the speed change by an initial speed (20 kph/40 kph). It is clear that the acceleration perceived by the vestibular system and the visually perceived acceleration are different. When the vehicle accelerates from 10 kph to 30 kph, there is also a speed change of 20 kph. In this case, an acceleration perceived by the vestibular system is 20 kph, and a visually perceived acceleration is 20 kph/10 kph. It can be learned that, although a same speed change (20 kph) is presented in both the two scenarios, because a visual perception result is also related to an initial speed, the visual perception result conflicts with a vestibular perception result.

**Third, motion sickness susceptibility may vary among different users.**

It should be noted that, due to individual differences of different users, perception sensitivity varies among vestibular systems, and different users have different anti-motion sickness requirements. Personalized anti-motion sickness solutions need to be provided for different users to meet anti-motion sickness requirements of more types of users.

Therefore, this application provides a display method, a display apparatus, and an electronic device, to determine, through prediction, an acceleration of a vehicle and an angular velocity of the vehicle with a low delay or even without a delay, and provide, on a display device of the vehicle with reference to information such as a user characteristic, a user status, and a motion status of the vehicle, visual anti-motion sickness content that matches the acceleration of the vehicle and/or the angular velocity of the vehicle, so that a conflict between a visual perception result and a vestibular perception result of the user is reduced and car sickness of the user is alleviated.

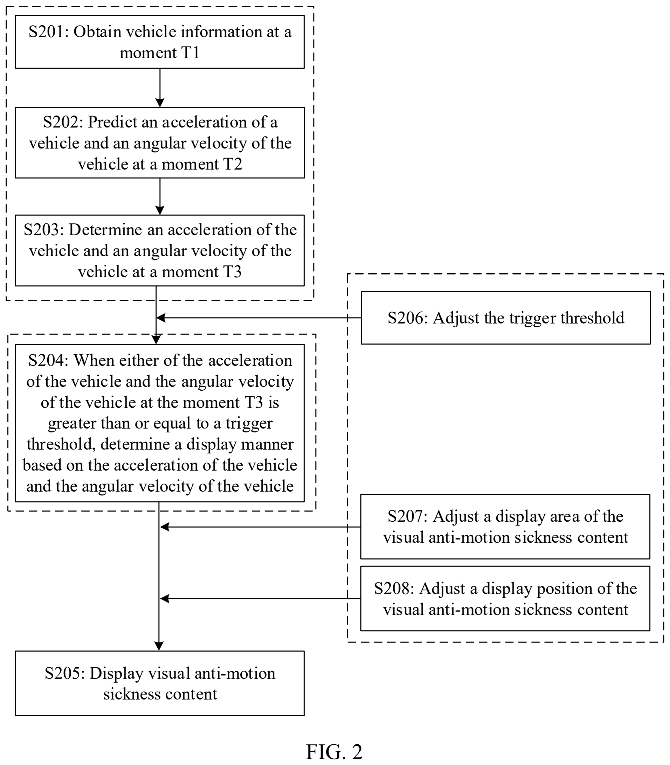

FIG. 2 is a schematic flowchart of a display method according to an embodiment of this application. The method may be applied to a transportation tool such as a vehicle, a ship, or an airplane. The following describes the method in detail.

**First, an acceleration and an angular velocity at a future moment are predicted, and a plurality of system delays are comprehensively considered, to achieve no delay in finally displayed visual anti-motion sickness content. This process mainly includes the following step S201 to step S203.**

S201: Obtain vehicle information at a moment T1.

S202: Predict an acceleration of a vehicle and an angular velocity of the vehicle at a moment T2.

S203: Determine an acceleration of the vehicle and an angular velocity of the vehicle at a moment T3.

For example, the vehicle information includes information such as an opening of a pedal, an angle of a steering wheel, a speed, time, and a vehicle mass.

Simply, the vehicle information at the moment T1 is obtained, and the acceleration of the vehicle and the angular velocity of the vehicle at the future moment T2 are predicted. In addition, time synchronization is performed with reference to time consumption information such as data storage, transmission, display rendering, and the foregoing prediction result, so that an acceleration of the vehicle and an angular velocity of the vehicle at a receiving moment (the moment T3) of a user end may be determined, and finally, visual anti-motion sickness content is displayed based on the acceleration of the vehicle and the angular velocity of the vehicle that are obtained through calculation. It may be understood that the visual anti-motion sickness content is displayed through an image, an animation, a video, or the like. For example, when the visual anti-motion sickness content is displayed based on the acceleration of the vehicle, the visual anti-motion sickness content may be displayed as a moving object. In other words, the acceleration of the vehicle and the angular velocity of the vehicle are presented based on moving visual anti-motion sickness content. In this process, an acceleration of the vehicle and an angular velocity of the vehicle at a future moment are predicted based on current vehicle information, and system delay time is combined, so that visual anti-motion sickness content is displayed with a low delay or even without a delay. This improves an anti-motion sickness effect.

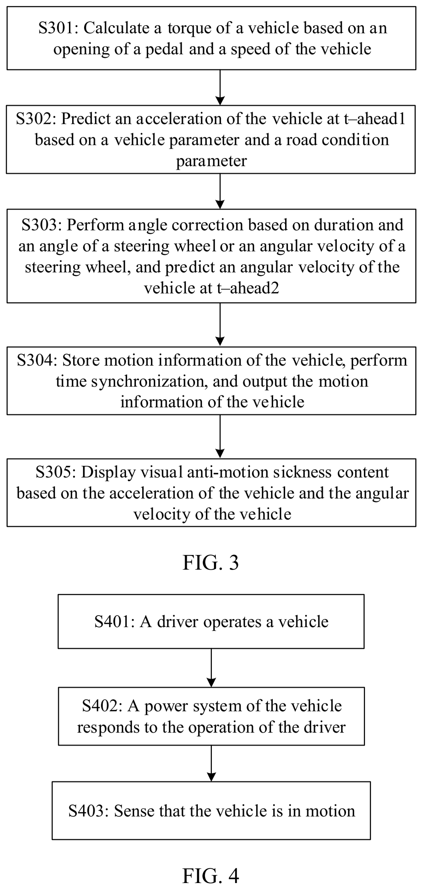

The following specifically describes the foregoing solution with reference to FIG. 3.

S301: Calculate a torque of the vehicle based on the opening of the pedal and the speed of the vehicle.

It should be noted that, for vehicle motion, an essence of the motion is that vehicle power drives the vehicle to generate a corresponding action. The vehicle power is related to the torque of the vehicle, and the torque of the vehicle usually affects a load capability, a starting speed, and the like of the vehicle, and is an important indicator for measuring the vehicle power. Therefore, it is very important to calculate the torque before determining the vehicle power.

For example, the torque of the vehicle is related to a plurality of parameters, for example, the speed of the vehicle, and an opening (a percentage or a push rod stroke value) of an accelerator and/or a brake pedal of the vehicle. The torque of the vehicle may be determined based on the opening of the vehicle pedal (including the accelerator and the brake pedal) and the speed of the vehicle.

It should be noted that, in the display method provided in this embodiment of this application, the torque of the vehicle may be obtained through calculation based on the speed of the vehicle and the opening of the vehicle pedal. A relationship between the speed of the vehicle and the opening of the vehicle pedal, and the torque of the vehicle can be expressed by using an accelerator characteristic (PedalMap). The speed of the vehicle and the opening of the vehicle pedal are used as a group of parameters. In step S301, a torque of the vehicle under any group of parameters may be obtained through bilinear interpolation.

S302: Predict an acceleration of the vehicle at a moment t-ahead1 based on a vehicle parameter and a road condition parameter.

For example, the vehicle parameter includes a vehicle pose, the vehicle mass, and the like. The road condition parameter represents a road surface type, for example, a cement road surface or a plastic surface.

For example, FIG. 4 is a schematic flowchart of obtaining an acceleration of the vehicle. The procedure includes the following steps.

S401: A driver operates the vehicle.

S402: A power system of the vehicle responds to the operation of the driver.

S403: Sense that the vehicle is in motion.

Specifically, after the driver steps on the accelerator or the brake pedal, in response to the operation of the driver, the power system of the vehicle may convert power of the vehicle into a value (v) requested by the driver. The vehicle determines an acceleration of the vehicle in response to the value requested by the driver. In addition, a sensor (for example, an inertial navigation system or an inertial measurement unit (inertial measurement unit, IMU)) of the vehicle determines that the vehicle is in motion, and transmits the currently measured acceleration of the vehicle to an internal path of the vehicle. The visual anti-motion sickness content can be displayed to the user through processing in the internal path of the vehicle. The value requested by the driver may be understood as the torque of the vehicle obtained through calculation in step S301.

In the foregoing process, there are two time differences: a time difference t1 (namely, time between step S401 and step S402) between the driver operating the vehicle and the power system of the vehicle responding to the operation of the driver; and a time difference t2 (namely, time between step S402 and step S403) between the power system of the vehicle responding to the operation of the driver and perceiving that the vehicle is in motion. Usually, the time difference t1 is greater than the time difference t2. It can be learned from the procedure shown in FIG. 4 that, a process from operating the vehicle by the driver to displaying the visual anti-motion sickness content to the user requires at least a time period of t1+t2. Therefore, it is clear that there is a delay in displaying the visual anti-motion sickness content. To minimize the delay, according to the display method provided in this embodiment of this application, motion information of the vehicle at a future moment may be predicted. When the vehicle accelerates, decelerates, or turns, the user is prone to motion sickness. Therefore, the display method in this embodiment of this application includes but is not limited to predicting the acceleration of the vehicle and the angular velocity of the vehicle. The following specifically describes a method for predicting the motion information of the vehicle.

First, an acceleration of the vehicle at a future moment may be predicted.

When the vehicle obtains information about the driver's operation on the vehicle, an acceleration of the vehicle may be determined according to Formula (1) below.

$$a = c_1 * tor/m - n \qquad\qquad \text{Formula (1)}$$

In the formula, $a$ represents the acceleration of the vehicle, in response to the operation of the driver, obtained through calculation; $tor$ represents the torque obtained through calculation in step S301; m represents the vehicle mass; n represents a reduction in the acceleration of the vehicle due to factors such as friction; and $c_1$ represents a conversion coefficient between the torque of the vehicle and the vehicle power. $c_1$/m and n may be obtained through calibration. For example, tor and corresponding a (read by the IMU) of the vehicle are obtained a plurality of times, to estimate $c_1$/m and n using a system of equations. The road condition parameter affects the parameter n in Formula (1).

By determining the acceleration of the vehicle according to Formula (1), with millisecond-level time consumption ignored, this manner can obtain the acceleration of the vehicle (t1+t2) ahead of the sensor of the vehicle such as the IMU, to predict an acceleration of the vehicle after t-ahead1 (t-ahead1=t1+t2).

Second, an angular velocity of the vehicle at a future moment may be predicted.

S303: Predict an angular velocity of the vehicle at t-ahead2 based on an angle of the steering wheel or an angular velocity of the steering wheel.

For example, the angular velocity of the vehicle may be predicted based on either of the angle of the steering wheel and the angular velocity of the steering wheel.

Specifically, for turning of the vehicle, a wheel angle is related to the angle of the steering wheel. Formula (2) below shows a relationship between the angle of the steering wheel and the wheel angle.

$$angle_{wheel} = f(angle_{sas}) * angle_{sas} \qquad \text{Formula (2)}$$

In the formula, $angle_{wheel}$ represents the wheel angle, $angle_{sas}$ represents the angle of the steering wheel, and $f$ ($angle_{sas}$) represents a constant that varies with the angle of the steering wheel. After a real-time wheel angle is obtained, an angular velocity of the vehicle during turning of the vehicle may be calculated.

It should be noted that, during turning of the vehicle, the angular velocity of the vehicle conforms to an Ackermann formula, for example, Formula (3) below.

$$\cos\beta \cdot \cot\partial = K / L \qquad \text{Formula (3)}$$

In the formula, $\partial$ represents an inner wheel steering angle of the vehicle; $\beta$ represents a front outer wheel steering angle of the vehicle; K represents a distance between centers of two driving pins; and L represents a wheelbase. During turning of the vehicle, a turning radius R of the vehicle may be obtained through calculation based on a current wheel steering angle and the wheelbase of the vehicle. In a relatively short time $\Delta t$, a speed of the vehicle is v. In this case, a travel distance of the vehicle in $\Delta t$ is $v*\Delta t$, an angle in radians through which the vehicle has turned is $v*\Delta t/R$, and a corresponding angular velocity is $v*\Delta t/R/\Delta t$ (that is, v/R). To describe the angular velocity of the vehicle more precisely, an acceleration $a$ of the vehicle may be introduced. The travel distance of the vehicle in $\Delta t$ is $v*\Delta t+(1/2)a(\Delta t)^2$, the angle in radians through which the vehicle has turned is $[v*\Delta t+(1/2)a(\Delta t)^2]/R$, and the corresponding angular velocity is $[v*\Delta t+(1/2)a(\Delta t)^2]/R/\Delta t$ (that is, $v+(1/2)a(\Delta t)/R$).

It should be understood that the wheel angle obtained according to Formula (2) above is not necessarily a steering angle of the vehicle, and the vehicle turns only when wheels are steered and the vehicle has a specific speed.

It should be noted that, similar to that described in the method 400, there is a time difference between the user stepping on the accelerator or the brake pedal and the sensor sensing that the vehicle is in motion (accelerating or decelerating); and there is also a time difference between the user turning the steering wheel and the sensor sensing that the vehicle is in motion (turning). According to step S302, the display method provided in this embodiment of this application can obtain the angular velocity of the vehicle ahead of the sensor of the vehicle such as the IMU based on the angle of the steering wheel or the angular velocity of the steering wheel, to obtain an angular velocity of the vehicle after t-ahead2.

For example, t-ahead1 and t-ahead2 may be different.

It should be noted that the sensor of the vehicle obtains a corresponding acceleration and a turning signal after the vehicle actually accelerates (decelerates) or the vehicle actually turns. In other words, the sensor of the vehicle cannot obtain a corresponding signal before an actual signal occurs. However, in this embodiment of this application, the acceleration of the vehicle and the angular velocity of the vehicle at the future moment can be predicted before the sensor of the vehicle obtains the acceleration and the turning signal.

Based on the foregoing solution, in the foregoing step S301 to step S303, based on a time difference between the vehicle receiving a signal (including an opening of the pedal, a turning angle of the steering wheel, and the like) generated by a user operation and displaying corresponding visual anti-motion sickness content, motion information of the vehicle such as the acceleration of the vehicle and the angular velocity of the vehicle at the future moment may be predicted in advance for a period of time. In a human driving scenario, when the user performs a sudden operation on the vehicle, motion information of the vehicle can be predicted in advance.

For example, t-ahead1 may be 290 ms, and t-ahead2 may be 150 ms.

S304: Store the motion information of the vehicle, perform time synchronization, and output the motion information of the vehicle.

It should be noted that the motion information of the vehicle at the future moment may be predicted according to the foregoing steps, but time synchronization needs to be further performed with reference to the foregoing predicted motion information of the vehicle, and time consumption (a system delay) of processes such as storage, transmission, and display rendering of the motion information of the vehicle, to determine a moment at which the user end receives the motion information of the vehicle, and ensure that visual anti-motion sickness content is displayed on a screen at the moment at which the user end receives the motion information of the vehicle.

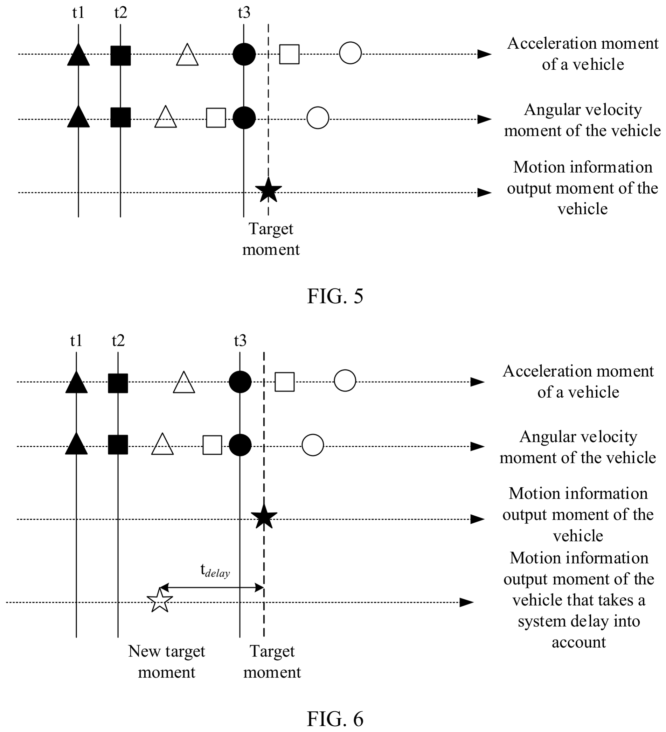

For ease of understanding, FIG. 5 is a diagram of time synchronization of the motion information of the vehicle. FIG. 5 shows three moment coordinate systems that respectively represent an acceleration moment coordinate system of the vehicle, an angular velocity moment coordinate system of the vehicle, and a motion information output moment coordinate system of the vehicle from top to bottom. Solid patterns (including solid triangles, squares, and circles) represent motion information (including an acceleration of the vehicle and an angular velocity of the vehicle) that is obtained through calculation at moments t1, t2, and t3 respectively. To be specific, in the acceleration moment coordinate system of the vehicle, a solid triangle represents an acceleration of the vehicle obtained through calculation at the moment t1, a solid square represents an acceleration of the vehicle obtained through calculation at the moment t2, and a solid circle represents an acceleration of the vehicle obtained through calculation at the moment t3. In the angular velocity moment coordinate system, a solid triangle represents an angular velocity of the vehicle obtained through calculation at the moment t1, a solid square represents an angular velocity of the vehicle obtained through calculation at the moment t2, and a solid circle represents an angular velocity of the vehicle obtained through calculation at the moment t3.

It can be learned from the foregoing descriptions that an acceleration of the vehicle at future time after t-ahead1 and an angular velocity of the vehicle at future time after t-ahead2 are predicted. Hollow patterns (including hollow triangles, squares, and circles) represent output moments of an acceleration of the vehicle and an angular velocity of the vehicle. To be specific, in the acceleration moment coordinate system of the vehicle, a hollow triangle represents an actual output moment of the acceleration of the vehicle obtained through calculation at the moment t1 (solid triangle), a hollow square represents an actual output moment of the acceleration of the vehicle obtained through calculation at the moment t2 (solid square), and a hollow circle represents an actual output moment of the acceleration of the vehicle obtained through calculation at the moment t3 (solid circle). In the angular velocity moment coordinate system of the vehicle, a hollow triangle represents an actual output moment of the angular velocity of the vehicle obtained through calculation at the moment t1 (solid triangle), a hollow square represents an actual output moment of the angular velocity of the vehicle obtained through calculation at the moment t2 (solid square), and a hollow circle represents an actual output moment of the angular velocity of the vehicle obtained through calculation at the moment t3 (solid circle).

That is, an acceleration of the vehicle or an angular velocity of the vehicle is **calculated** at a moment corresponding to a **solid** pattern in FIG. 5, and an acceleration of the vehicle or an angular velocity of the vehicle is **output** at a moment corresponding to a **hollow** pattern. In an actual process, the acceleration of the vehicle or the angular velocity of the vehicle that is obtained through calculation at the moment corresponding to the solid pattern is stored before the moment corresponding to the hollow pattern, to meet a storage requirement of data (the acceleration of the vehicle and/or the angular velocity of the vehicle).

Because moments of the motion information output moment coordinate system, the acceleration moment coordinate system, and the angular velocity moment coordinate system of the vehicle shown in FIG. 5 are not completely aligned with each other, a time synchronization operation needs to be performed.

For example, a moment corresponding to a solid pentagon in FIG. 5 is a target moment, and the target moment is a moment at which data (including an acceleration of the vehicle and/or an angular velocity of the vehicle) needs to be output. It can be clearly seen from FIG. 5 that data output moments corresponding to the hollow patterns (including the hollow triangles, the hollow squares, and the hollow circles) in the acceleration moment coordinate system of the vehicle and the angular velocity moment coordinate system of the vehicle are not aligned with a moment that corresponds to the solid pentagon in the motion information output moment coordinate system of the vehicle and at which data needs to be actually output, and therefore, specific data to be output at the moment at which the data needs to be actually output (a moment corresponding to the solid pentagon) cannot be determined. Therefore, data to be actually output at the target moment may be determined through a time synchronization operation. It should be noted that the time synchronization operation includes but is not limited to the following manners:

1. The nearest data is used as the data to be actually output at the target moment. For example, for an acceleration of the vehicle, in the acceleration moment coordinate system of the vehicle, the hollow square is nearest to the target moment corresponding to the solid pentagon in the motion information output moment coordinate system. Therefore, an acceleration of the vehicle corresponding to the hollow square in the acceleration moment coordinate system of the vehicle may be used as the data to be actually output at the target moment. For an angular velocity of the vehicle, in the angular velocity moment coordinate system of the vehicle, the hollow square is nearest to the target moment corresponding to the solid pentagon in the motion information output moment coordinate system. Therefore, an angular velocity of the vehicle corresponding to the hollow square in the angular velocity moment coordinate system of the vehicle may be used as the data to be actually output at the target moment.

2. The data to be actually output at the target moment is determined by using a linear interpolation method. For example, for an acceleration of the vehicle, a difference between an acceleration of the vehicle corresponding to the hollow triangle in the acceleration moment coordinate system of the vehicle and an acceleration of the vehicle corresponding to the hollow square may be obtained, and an obtained result is used as an acceleration of the vehicle that is to be actually output at the target moment corresponding to the solid pentagon in the motion information output moment coordinate system. For the angular velocity of the vehicle, a difference between an angular velocity of the vehicle corresponding to the hollow square in the angular velocity moment coordinate system of the vehicle and an angular velocity of the vehicle corresponding to the hollow circle may be obtained, and an obtained result is used as an angular velocity of the vehicle that is to be actually output at the target moment corresponding to the solid pentagon in the motion information output moment coordinate system.

It should be understood that the data to be actually output at the target moment may be determined through the time synchronization operation. A specific implementation of the time synchronization operation is not limited in embodiments of this application. Determining, by using another linear or non-linear interpolation method, the data to be actually output at the target moment also falls within the protection scope of this application.

Further, to enhance stability and smoothness of the data to be actually output at the target moment, to-be-output data may be filtered through Kalman filtering. A specific filtering manner is not limited in embodiments of this application.

It should be noted that a moment corresponding to the solid pentagon is a target moment, and the target moment is a moment at which data needs to be output. In other words, a display device of the vehicle needs to display visual anti-motion sickness content at the target moment. In the foregoing descriptions, the data to be actually output at the target moment includes the acceleration of the vehicle or the angular velocity of the vehicle. It may be understood that the visual anti-motion sickness content may be displayed on the display device by using an image, an animation, or a video. The visual anti-motion sickness content may include a moving object, and the acceleration of the vehicle or the angular velocity of the vehicle is reflected through a motion of the object. Therefore, before actual display, integral calculation may be performed on the acceleration of the vehicle or the angular velocity of the vehicle, to obtain a corresponding speed and steering angle of the vehicle. In this way, an object moving at the speed obtained through integral calculation or an object moving at the steering angle obtained through integral calculation may be displayed, to achieve an anti-motion sickness effect. It can be learned that the user may obtain visual anti-motion sickness content at the target moment, and a moving object is actually output at the target moment. A movement speed or a steering angle of the object is obtained by performing integral calculation on the acceleration of the vehicle and the angular velocity of the vehicle, or a position at which a moving object to be displayed in the current frame should finally appear is obtained through time integration calculation. Integral time needs to be input to perform an integral operation on the acceleration of the vehicle or the angular velocity of the vehicle. The integral time is related to a frame rate actually displayed on the display device. For example, when the frame rate is 60 Hz, integral is performed on duration of 1/60 seconds.

Further, the steering angle of the vehicle is obtained by integrating the angular velocity of the vehicle. Because the steering angle of the vehicle may be accumulated, the steering angle of the vehicle may be corrected under the following conditions:

1. When the angle is described based on a relative position relationship of the vehicle body in the geodetic coordinate system (for example, with 0° being due north) at a start moment of the vehicle, the accumulated steering angle may exceed 360°. When the angular velocity of the vehicle exceeds 360°, normalization processing needs to be performed, and a steering angle obtained through normalization processing is within a range greater than or equal to 0° and less than or equal to 360°. For example, when the steering angle is 365°, an angle obtained through normalization processing is 5°. In the geodetic coordinate system, when the vehicle head faces due north, that is, the angle is 0°; or when the vehicle head faces due east, the angle is 90°.

2. When the wheel and the vehicle body realign to 0°, that is, when a new angle after a turn is completed is defined as a new angle origin (0°) for description, normalization processing needs to be performed, and a steering angle obtained through normalization processing is within a range greater than or equal to -180° and less than or equal to 180°.

It should be noted that a specific system delay exists before the visual anti-motion sickness content is finally displayed to the user. The system delay includes but is not limited to time consumed for data transmission between domains, time consumed for data processing by each module, and the like. For example, a process of data transmission between a controller area network (controller area network, CAN) and an in-vehicle display domain may include time of data compression, data transmission, and data decompression. Video rendering processing performed by a CDC module is quite time-consuming.

It can be learned that, due to the foregoing system delay, data is output at the target moment shown in FIG. 5, but the user actually receives, at a moment after the target moment, the data to be output at the target moment. As a result, the data cannot be transmitted to the user in time. Therefore, the target moment shown in FIG. 5 may be advanced to overcome a problem caused by the system delay.

FIG. 6 is a diagram of time synchronization of the motion information of the vehicle. In addition to the three moment coordinate systems (the acceleration moment coordinate system of the vehicle, the angular velocity moment coordinate system of the vehicle, and the motion information output moment coordinate system of the vehicle) shown in FIG. 5, FIG. 6 includes a motion information output moment coordinate system of the vehicle that takes a system delay into account. For example, the system delay time is $t_{delay}$. To receive data at a moment corresponding to a solid pentagon, the user may output data at a new target moment corresponding to a hollow pentagon in the motion information output moment coordinate system of the vehicle that takes a system delay into account. After the system delay time $t_{delay}$ elapses, the user receives the data at the target moment. In this way, a moment at which the user receives the data is consistent with a moment at which the vehicle actually runs the data, that is, an acceleration and a steering angle of visual anti-motion sickness content that are obtained by the user on the screen are consistent with a current actual acceleration and steering angle of the vehicle, to achieve a delay-free effect. For example, the user obtains, at a moment t1 by using the screen, visual anti-motion sickness content indicating that the vehicle turns left, and the vehicle also turns left at the moment t1.

It should be noted that when the system delay time $t_{delay}$ is less than t-ahead1 and t-ahead2, the delay-free effect may be achieved. If the system delay time $t_{delay}$ is greater than t-ahead1 or greater than any time period of t-ahead2, impact caused by a system delay can be reduced, and the delay-free effect cannot be met. For example, t-ahead1 may be 290 ms, t-ahead2 may be 150 ms, and the system delay time $t_{delay}$ is generally less than 100 ms. It can be learned that, generally, the display method provided in the foregoing embodiments of this application can achieve the delay-free effect.

S305: Display the visual anti-motion sickness content based on the acceleration of the vehicle and the angular velocity of the vehicle.

It should be noted that, after the acceleration of the vehicle and the angular velocity of the vehicle are determined, visual anti-motion sickness content may be displayed to the user. The visual anti-motion sickness content may be synchronized with actual motion information of the vehicle and displayed on the display device of the vehicle. The display device includes but is not limited to a front passenger screen, a rear seat screen, a laser curtain screen, and the like.

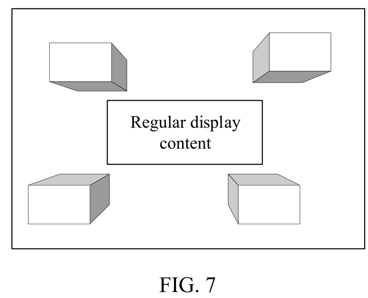

For example, the visual anti-motion sickness content may indicate current actual motion information of the vehicle through image movement. For example, FIG. 7 is a diagram of the visual anti-motion sickness content.

FIG. 7 is a diagram of visual anti-motion sickness content on a display device. A middle part in FIG. 7 is regular display content, and the display content may be an image, a video, a page, or the like that is being displayed by the display device of the vehicle. A plurality of blocks are displayed around the regular display content, and motion information of the vehicle is transferred to the user through motion of the plurality of blocks.

For example, when the user directly faces the display device, the squares may reflect the motion information of the vehicle according to the following motion rule:

1. The squares face toward the user and expand from a center to an edge, and correspondingly the vehicle accelerates forward.

2. The squares face away from the user and contract from an outer circumference to the center, and correspondingly the vehicle decelerates forward.

3. A coordinate system is established in space in which the display device is located, and one pixel at a center position and one pixel at an edge position respectively represent different distances. For example, the pixel at the central position represents a distance of 1 m, and the pixel at the edge position represents a distance of 10 cm. An acceleration of the vehicle may be correspondingly converted by moving the pixel.

For example, the acceleration of the vehicle is integrated to obtain a speed v, a square at the central position moves at the speed v, and a square at the edge position moves at the speed v. Because a distance corresponding to the pixel at the center position is greater than a distance corresponding to the pixel at the edge position, when the square actually moves by a distance of one pixel, from a perspective of a display effect, the square at the edge position moves at a high speed.

4. When the block moves from right to left, the vehicle is turning right correspondingly; or when the block moves from left to right, the vehicle is turning left correspondingly.

5. In the coordinate system established in the space in which the display device is located, an angle at which the visual anti-motion sickness content moves leftward and rightward is -60° to 60°. A steering angle of the visual anti-motion sickness content corresponds to a steering angle of the vehicle. The visual anti-motion sickness content moves by 1°, and correspondingly the vehicle turns by 1°.

Based on the steps described in the foregoing method 300, the motion information (including the acceleration of the vehicle and the angular velocity of the vehicle) of the vehicle may be predicted, and the acceleration and the angular velocity of the vehicle are displayed on the display device of the vehicle through object movement, to provide visual anti-motion sickness content with a low delay or even without a delay for the user, thereby reducing a motion sickness symptom or avoiding a motion sickness symptom.

**Second, a movement direction and a speed change characteristic of the visual anti-motion sickness content may be further determined based on the acceleration of the vehicle and the angular velocity of the vehicle, and the speed change characteristic is adjusted based on a user characteristic, a user status, a motion status of the vehicle, or the like, to meet an anti-motion sickness purpose in various scenarios. This process mainly includes the following step S204 to step S205.**

S204: When either of the acceleration of the vehicle and the angular velocity of the vehicle at the moment T3 is greater than or equal to a trigger threshold, determine a display manner based on the acceleration of the vehicle and the angular velocity of the vehicle.

It should be noted that T3 represents a moment at which the user receives data (the acceleration of the vehicle and the angular velocity of the vehicle). The display manner may be understood as a display manner of the visual anti-motion sickness content. The movement direction and the speed change characteristic of the visual anti-motion sickness content may be determined based on the acceleration and the angular velocity of the vehicle.

For example, the display manner includes the movement direction and the speed change characteristic of the visual anti-motion sickness content. The visual anti-motion sickness content may be a block shown in FIG. 7. The movement direction may include expanding toward an edge, contracting toward a center, moving to the left, moving to the right, and the like. The speed change characteristic includes acceleration, deceleration, moving at a constant speed, remaining stationary, and the like.

Optionally, the speed change characteristic may be adjusted based on the user characteristic, the user status, the motion status of the vehicle, or the like.

For example, the user characteristic may refer to motion sickness susceptibility of the user, and motion sickness susceptibility has a particular individual difference. The user status may be a current car sickness level of the user. The motion status of the vehicle may be a speed of the vehicle or the like.

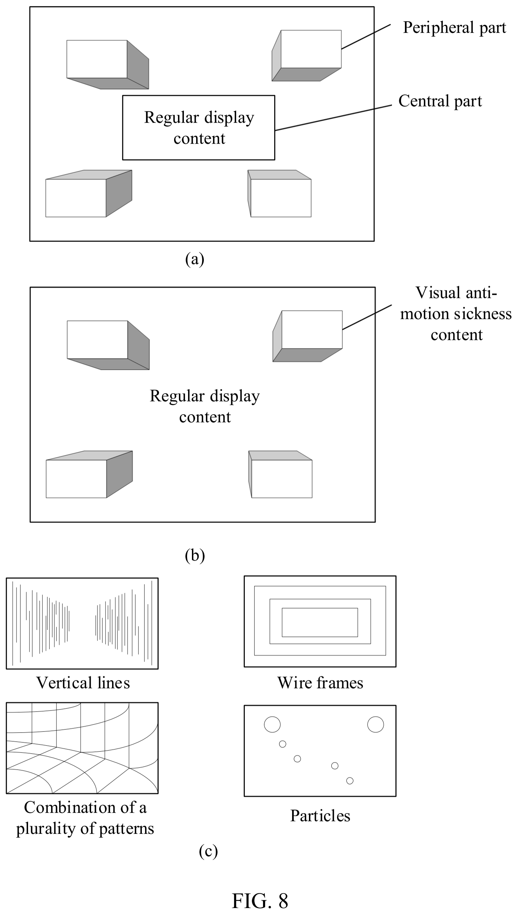

For ease of understanding, FIG. 8 is a diagram of visual anti-motion sickness content on a display device. A movement direction and a speed change characteristic of the visual anti-motion sickness content can be adjusted based various factors to achieve a better anti-motion sickness effect.

In an implementation, as shown in (a) in FIG. 8, regular display content is displayed in a middle part of a display region of the display device, and visual anti-motion sickness content is displayed in a peripheral part.

In an implementation, as shown in (b) in FIG. 8, regular display content is displayed in an entire display region of the display device, and visual anti-motion sickness content is superimposed on the regular display content in a form of a layer.

It should be noted that the visual anti-motion sickness content may be a cube, a flat square, a stone, a ball, a horizontal line, a vertical line, a wire frame, a line combination, a particle, or the like, or a combination of the foregoing patterns or shapes. For ease of understanding, (c) in FIG. 8 shows a group of visual anti-motion sickness content. The visual anti-motion sickness content may be a vertical line, a wire frame, a particle, or a combination of a plurality of patterns.

It should be noted that the movement direction and the speed change characteristic of the visual anti-motion sickness content on the display device may be adjusted based on an acceleration of the vehicle and/or an angular velocity of the vehicle.

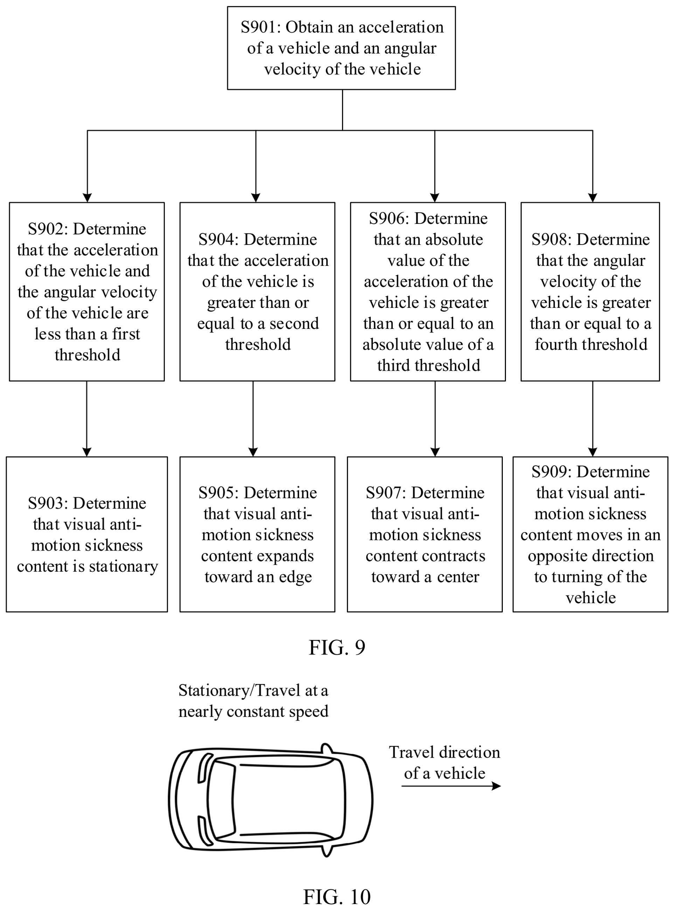

FIG. 9 is a flowchart in which visual anti-motion sickness content changes with an acceleration of a vehicle and an angular velocity of the vehicle. It should be noted that a manner in which the visual anti-motion sickness content changes with the acceleration of the vehicle and the angular velocity of the vehicle may include the following scenarios:

S901: Obtain the acceleration of the vehicle and the angular velocity of the vehicle.

**Scenario 1**

S902: Determine that the acceleration of the vehicle and the angular velocity of the vehicle are less than a first threshold.

S903: Determine that the visual anti-motion sickness content is stationary.

In other words, in a scenario shown in FIG. 10, the vehicle is stationary or travels at a constant/nearly constant speed in a travel direction of the vehicle. When the acceleration of the vehicle and the angular velocity of the vehicle are less than the first threshold, the visual anti-motion sickness content is stationary.

The first threshold is a threshold that can be perceived by the user. When the acceleration or a steering angle of the vehicle reaches the first threshold, the vestibular system of the user perceives that the vehicle is accelerating or turning. When the vehicle travels at the nearly constant speed, and neither the acceleration of the vehicle nor the angular velocity of the vehicle reaches the first threshold, the vestibular system of the user cannot perceive acceleration, deceleration, or turning of the vehicle. The vestibular system of the user considers that the vehicle is moving at the constant speed. In this case, the visual anti-motion sickness content is stationary.

**Scenario 2**

S904: Determine that the acceleration of the vehicle is greater than or equal to a second threshold.

S905: Determine that the visual anti-motion sickness content expands toward an edge.

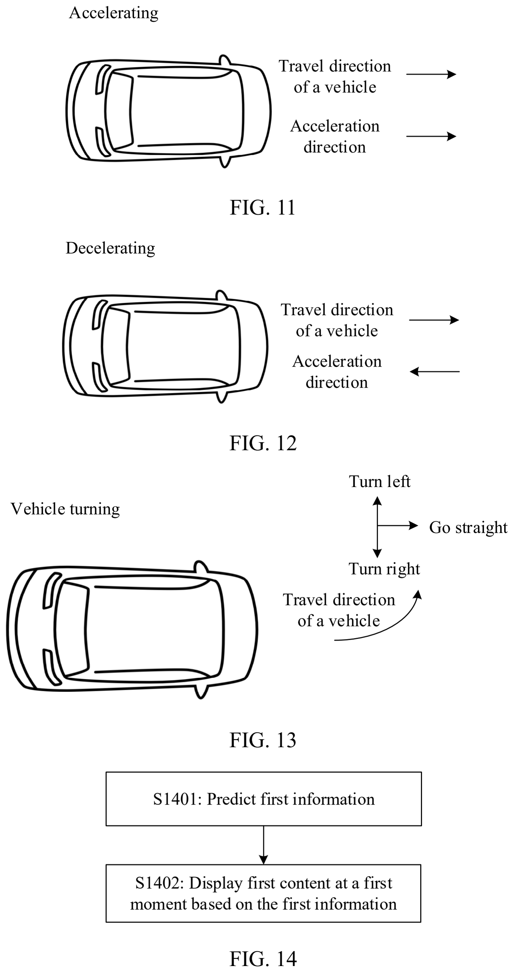

In other words, in a scenario shown in FIG. 11, the vehicle is in an acceleration state. In this case, a travel direction of the vehicle is consistent with an acceleration direction. When the acceleration of the vehicle is greater than or equal to the second threshold, the visual anti-motion sickness content expands toward an edge.

The second threshold is a threshold that can be perceived by the user. Because the vehicle is in the acceleration state, the travel direction of the vehicle is consistent with the acceleration direction. The second threshold is a positive number, and the acceleration of the vehicle is also a positive number. When the acceleration of the vehicle is greater than or equal to the second threshold, the vestibular system of the user perceives that the vehicle is accelerating. A visual prompt indicating that the vehicle is accelerating is provided for the user by using a movement direction in which the visual anti-motion sickness content expands toward an edge. In addition, as a speed of the vehicle increases, a movement speed at which the visual anti-motion sickness content expands toward an edge also increases.

Further, a movement speed of the visual anti-motion sickness content is related to the acceleration of the vehicle. For example, Formula (4) shows a relationship between the movement speed of the visual anti-motion sickness content and time.

$$V1=f(t) \qquad\qquad \text{Formula (4)}$$

In the formula, V1 represents a movement speed of the visual anti-motion sickness content in a case in which the vehicle accelerates, and t represents time.

It should be noted that the movement speed of the visual anti-motion sickness content represented by V1 may change with the speed of the vehicle. Because the vehicle is accelerating, the speed of the vehicle increases over time. Accordingly, the movement speed of the visual anti-motion sickness content also increases. A change rate of the movement speed of the visual anti-motion sickness content may be understood as an acceleration of the visual anti-motion sickness content, that is, a speed change characteristic of the visual anti-motion sickness content.

Optionally, the change rate of V1 may be a fixed value. For example, V1=m*t, where m may be a constant and does not change with the acceleration of the vehicle. Alternatively, the change rate of V1 may change with the acceleration of the vehicle.

It should be noted that V1 may have a maximum value, and the maximum value may be a fixed value, or may change with the speed of the vehicle or the acceleration of the vehicle. For example, a larger speed or acceleration of the vehicle indicates a larger or smaller maximum value of V1. For a user with high motion sickness susceptibility, a smaller maximum value of V1 may indicate a better anti-motion sickness effect. A maximum value of V1 may be set to different levels based on the speed of the vehicle or the acceleration of the vehicle. When V1 reaches the maximum value, the visual anti-motion sickness content may move at a movement speed of the maximum value of V1 until the acceleration of the vehicle is less than the second threshold.

It should be noted that the change rate of V1 is related to a user characteristic and a user status. In other words, the speed change characteristic of the visual anti-motion sickness content may be adjusted based on the user characteristic and the user status. The user characteristic refers to motion sickness susceptibility of the user, and motion sickness susceptibility has a particular individual difference. The motion sickness susceptibility of the user may be directly obtained through reporting by the user, or current motion sickness susceptibility may be deduced based on a historical record of the user, or the motion sickness susceptibility may be determined based on a current status of the user (when the user is in a poor state, the user is more likely to get car sickness). When the user has high motion sickness susceptibility, the change rate of V1 may be reduced. In other words, when the user has high motion sickness susceptibility, the change rate of the movement speed of the visual anti-motion sickness content may be reduced. The user status refers to a current car sickness level of the user. When the current car sickness level of the user increases, the change rate of V1 may be reduced. In other words, when the current car sickness level of the user increases, the change rate of the movement speed of the visual anti-motion sickness content may be reduced.

**Scenario 3**

S906: Determine that an absolute value of the acceleration of the vehicle is greater than or equal to an absolute value of a third threshold.

S907: Determine that the visual anti-motion sickness content contracts toward a center.

In other words, in a scenario shown in FIG. 12, the vehicle is in a deceleration state. In this case, a travel direction of the vehicle is opposite to an acceleration direction. When the absolute value of the acceleration of the vehicle is greater than or equal to the absolute value of the third threshold, the visual anti-motion sickness content expands toward an edge.

The third threshold is a threshold that can be perceived by the user. Because the vehicle is in the deceleration state, the travel direction of the vehicle is opposite to the acceleration direction. The third threshold is a negative number, and the acceleration of the vehicle is also a negative number. When the absolute value of the acceleration of the vehicle is greater than or equal to the absolute value of the third threshold, the vestibular system of the user perceives that the vehicle is decelerating. A visual prompt indicating that the vehicle is decelerating is provided for the user by using a movement direction in which the visual anti-motion sickness content contracts toward a center. In addition, as a speed of the vehicle decreases, a movement speed at which the visual anti-motion sickness content contracts toward a center may also increase.

Further, a movement speed of the visual anti-motion sickness content is related to the acceleration of the vehicle. For example, Formula (5) shows a relationship between the movement speed of the visual anti-motion sickness content and time.

$$V1=g(t) \qquad \text{Formula (5)}$$

In the formula, V2 represents a movement speed of the visual anti-motion sickness content in a case in which the vehicle is decelerating, and t represents time.

It should be noted that the movement speed of the visual anti-motion sickness content represented by V2 may change with the speed of the vehicle. Because the vehicle is decelerating, the speed of the vehicle decreases over time. Accordingly, the movement speed of the visual anti-motion sickness content also decreases. A change rate of the movement speed of the visual anti-motion sickness content may be understood as an acceleration of the visual anti-motion sickness content, that is, a speed change characteristic of the visual anti-motion sickness content.

Optionally, the change rate of V2 may be a fixed value, or may be set to different levels based on the acceleration of the vehicle, or may change with the acceleration of the vehicle.

It should be noted that V2 may have a maximum value, and the maximum value may be a fixed value, or may change with the speed of the vehicle or the acceleration of the vehicle. For example, a larger speed or acceleration of the vehicle indicates a larger or smaller maximum value of V2. A maximum value of V2 may be set to different levels based on the speed of the vehicle or the acceleration of the vehicle. When V2 reaches the maximum value, the visual anti-motion sickness content may move at a movement speed of the maximum value of V2 until the absolute value of the acceleration of the vehicle is less than the absolute value of the third threshold.

It should be noted that the change rate of V2 is related to a user characteristic and a user status. In other words, the speed change characteristic of the visual anti-motion sickness content may be adjusted based on the user characteristic and the user status. The user characteristic refers to motion sickness susceptibility of the user. When the user has high motion sickness susceptibility, the change rate of V2 may be reduced. In other words, when the user has high motion sickness susceptibility, the change rate of the movement speed of the visual anti-motion sickness content may be reduced. The user status refers to a current car sickness level of the user. When the current car sickness level of the user increases, the change rate of V2 may be reduced. In other words, when the current car sickness level of the user increases, the change rate of the movement speed of the visual anti-motion sickness content may be reduced.

**Scenario 4**

S908: Determine that the angular velocity of the vehicle is greater than or equal to a fourth threshold.

S909: Determine that the visual anti-motion sickness content moves in an opposite direction to turning of the vehicle.

In other words, in a scenario shown in FIG. 13, the vehicle is turning left. When the angular velocity of the vehicle is greater than or equal to the fourth threshold, the visual anti-motion sickness content moves in the opposite direction to turning of the vehicle.

The fourth threshold is a threshold that can be perceived by the user. When the angular velocity of the vehicle is greater than or equal to the fourth threshold, the vestibular system of the user perceives that the vehicle is turning. A visual prompt indicating that the vehicle is turning is provided for the user by moving the visual anti-motion sickness content in the opposite direction to turning of the vehicle. In addition, as the angular velocity of the vehicle increases, a movement speed of the visual anti-motion sickness content also increases.

Further, the movement speed of the visual anti-motion sickness content is related to the angular velocity of the vehicle. For example, Formula (6) shows a relationship between the movement speed of the visual anti-motion sickness content and the angular velocity of the vehicle.

$$V3=f(yaw\_speed) \qquad \text{Formula (6)}$$

In the formula, V3 represents the movement speed of the visual anti-motion sickness content during turning of the vehicle, and yaw_speed represents the angular velocity of the vehicle.

It should be noted that V2 may be a fixed value, or may be set to different levels as the angular velocity of the vehicle changes, or may change linearly as the angular velocity of the vehicle changes, or may change in a form of an exponential function as the angular velocity of the vehicle changes, or may change in a form of a power function as the angular velocity of the vehicle changes. A functional relationship between V3 and the angular velocity of the vehicle is related to a user characteristic and a user status. In other words, the movement speed of the visual anti-motion sickness content may be adjusted based on the user characteristic and the user status. The user characteristic refers to motion sickness susceptibility of the user, and the user status refers to a current car sickness level of the user.

For example, when the user has high motion sickness susceptibility, a slope of the movement speed of the visual anti-motion sickness content that linearly changes with the angular velocity of the vehicle may be reduced; or when the current car sickness level of the user increases, a slope of the movement speed of the visual anti-motion sickness content that linearly changes with the angular velocity of the vehicle may be reduced.

It should be noted that transition from the scenario 2, the scenario 3, or the scenario 4 into the scenario 1 allows the movement speed of the visual anti-motion sickness content to change to a stationary state abruptly or gradually. When the movement speed of the visual anti-motion sickness content changes to the stationary state gradually, a moment at which the trigger threshold is reached may be used as a starting point from which the speed gradually reduces to zero. When switching occurs between the scenarios, the movement speed of the visual anti-motion sickness content may change abruptly, or for the purpose of maintaining continuity of a picture and providing a more coherent visual display effect for the user, may change gradually.

In conclusion, in the display method provided in this embodiment of this application, the movement direction and the speed change characteristic of the visual anti-motion sickness content may be determined based on the acceleration of the vehicle and the angular velocity of the vehicle. The movement direction of the visual anti-motion sickness content includes expanding toward an edge, contracting toward a center, moving to the left, moving to the right, and the like. The speed change characteristic of the visual anti-motion sickness content includes acceleration, deceleration, moving at a constant speed, remaining stationary, and the like.

For example, the acceleration of the vehicle and the angular velocity of the vehicle may be obtained based on the content described in the foregoing method 300; or the acceleration of the vehicle and the angular velocity of the vehicle may be obtained by using an IMU sensor or a global positioning system (global positioning system, GPS) sensor; or the acceleration of the vehicle and the angular velocity of the vehicle may be obtained through calculation based on the speed of the vehicle; or the acceleration of the vehicle and the angular velocity of the vehicle may be obtained through extraction based on a signal obtained by using a camera of the vehicle; the acceleration of the vehicle and the angular velocity of the vehicle may be obtained based on a calculation result of a navigation application. In the display method provided in this embodiment of this application, a specific manner of obtaining the acceleration of the vehicle and the angular velocity of the vehicle in step S901 is not limited.

S205: Display the visual anti-motion sickness content.

It should be noted that, in the foregoing different scenarios, the movement direction and the speed change characteristic of the visual anti-motion sickness content are determined, and the visual anti-motion sickness content is displayed on the display device.

Optionally, the visual anti-motion sickness content may be displayed on the peripheral part of the display device, as shown in (a) in FIG. 8, or may be superimposed on the regular display content in a form of a layer, as shown in (b) in FIG. 8.

**Third, the trigger threshold is adjusted based on at least one of the user characteristic, the user status, and the motion status of the vehicle; or a display area and a display position of the visual anti-motion sickness content are adjusted for the user based on at least one of the user characteristic, the user status, and the motion status of the vehicle, and a visual angle and a position of the display device relative to a retina of the user, to achieve a personalized display effect of the visual anti-motion sickness content, so that a motion sickness alleviation effect is better. This process mainly includes the following step S206 to step S208.**

S206: Adjust the trigger threshold.

It should be noted that the trigger threshold is the first threshold, the second threshold, the third threshold, and the fourth threshold in the foregoing method 900.

For example, step S206 may be performed before step S204.

S207: Adjust the display area of the visual anti-motion sickness content.

S208: Adjust the display position of the visual anti-motion sickness content.

For example, step S207 and step S208 may be performed before step S205. To be specific, before the visual anti-motion sickness content is finally displayed on the display device, the movement direction and the speed change characteristic of the visual anti-motion sickness content are adjusted, or the display area and the display position of the visual anti-motion sickness content may be adjusted.

It should be noted that only the trigger threshold may be adjusted, or only the display area and the display position of the visual anti-motion sickness content may be adjusted, or the trigger threshold, the display area, and the display position may be adjusted. This is not limited in embodiments of this application. The following specifically describes a method for adjusting the trigger threshold and adjusting the display area and the display position of the visual anti-motion sickness content.

**First, the trigger threshold is adjusted.**

For example, the trigger threshold is adjusted based on at least one of the user characteristic, the user status, and the motion status of the vehicle.

It should be noted that when either of the acceleration of the vehicle and the angular velocity of the vehicle is greater than or equal to the trigger threshold, the display manner of the visual anti-motion sickness content may be determined based on the acceleration of the vehicle and the angular velocity of the vehicle. A trigger threshold of the acceleration of the vehicle and a trigger threshold of the angular velocity of the vehicle may be different.

For example, in addition to the movement direction and the speed change characteristic of the visual anti-motion sickness content described above, the display manner of the visual anti-motion sickness content includes a motion characteristic, a color, a symbol, and the like.

It should be noted that individual differences of trigger thresholds are obvious, and trigger thresholds of different users may be different. Generally, a threshold that can be perceived by most users may be set as the trigger threshold. To achieve a better anti-motion sickness effect, the trigger threshold may be adjusted.

It should be noted that the user characteristic refers to the motion sickness susceptibility of the user, and the user status refers to the current car sickness level of the user. Higher motion sickness susceptibility or a higher current car sickness level of the user indicates a lower threshold for perceiving that the vehicle is accelerating, decelerating, or turning. Therefore, the trigger threshold may be adjusted based on the user characteristic or the user status. For example, in case of higher motion sickness susceptibility or a higher current car sickness level of the user, the trigger threshold may be reduced. In addition, the trigger threshold may be adjusted based on the motion status of the vehicle. For example, a higher speed of the vehicle indicates a higher vibration frequency of the vehicle and a higher threshold for perceiving an acceleration of the vehicle by the user. In this case, the trigger threshold may be increased.

It should be understood that parameters that can be used to adjust the trigger threshold include the user characteristic, the user status, and the motion status of the vehicle. In an actual application, the trigger threshold may be adjusted based on at least one of the foregoing parameters. When the trigger threshold is adjusted based on a plurality of parameters, a minimum threshold obtained through adjustment is used as an adjusted trigger threshold.

For example, a relationship between the foregoing parameters (the user characteristic, the user status, and the motion status of the vehicle) serving as input data and the trigger threshold may be shown in Formula (7) below.

$$\text{threshold} = f(S) \qquad\qquad \text{Formula (7)}$$

In the formula, threshold represents the trigger threshold, and S represents the input data. The relationship between the input data and the trigger threshold includes but is not limited to a linear relationship, a power function relationship, and an exponential function relationship.

For example, if the trigger threshold adjusted based on the user characteristic and the user status is a threshold 1, further, an adjusted trigger threshold obtained based on the motion status of the vehicle is a threshold 2. If the threshold 1 is less than the threshold 2, a final trigger threshold obtained through this adjustment is the threshold 1.

It may be understood that, when the acceleration of the vehicle and/or the angular velocity of the vehicle is greater than or equal to the trigger threshold, the display manner of the visual anti-motion sickness content, for example, a motion characteristic, a color, or a symbol, may be determined based on the acceleration of the vehicle and the angular velocity of the vehicle.

For example, a greater acceleration or angular velocity of the vehicle indicates a greater acceleration or angular velocity of movement of the visual anti-motion sickness content. The acceleration or angular velocity of movement of the visual anti-motion sickness content may be represented by using a color, a symbol, an arrow, or the like. For example, a brighter color of the visual anti-motion sickness content indicates a higher acceleration, and a more curved arrow indicates a higher angular velocity.

**Second, the display area and the display position of the visual anti-motion sickness content are adjusted.**

For example, the display area and the display position of the visual anti-motion sickness content are adjusted based on at least one of the user characteristic, the user status, and the motion status of the vehicle, and the visual angle and the position of the display device relative to the retina of the user.

For example, after the display manner of the visual anti-motion sickness content is determined, the display area and the display position of the visual anti-motion sickness content may be further adjusted.

It should be noted that the user characteristic refers to the motion sickness susceptibility of the user, and the user status refers to the current car sickness level of the user. A larger display area of the visual anti-motion sickness content indicates a better anti-motion sickness effect. When the user is in a state with a high probability of car sickness, the display area of the visual anti-motion sickness content is increased. Therefore, the display area of the visual anti-motion sickness content may be adjusted based on at least one of the user characteristic, the user status, and the motion status of the vehicle. For example, in case of higher motion sickness susceptibility or a higher current car sickness level of the user, the display area is increased or reduced. In case of a high speed of the vehicle, the display area is increased or reduced. For a user prone to visual dizziness (for example, a 3D motion sickness), reducing the display area can help avoid visual dizziness.

It should be noted that different visual angles and positions of the retina of the user have different processing capabilities for motion stimulation, and a display position of the visual anti-motion sickness content needs to be adjusted based on the visual angle and the position of the display device relative to the retina of the user. Generally, a peripheral visual field has a stronger ability to process motion stimulation of an object than a central visual field. Therefore, when the visual anti-motion sickness content is displayed, the visual anti-motion sickness content may be preferentially displayed in the peripheral part of the display device, for example, as shown in (a) in FIG. 8. As the display area of the visual anti-motion sickness content increases, an area of the peripheral visual field is preferentially expanded. As the display area of the visual anti-motion sickness content further increases, the display area of the visual anti-motion sickness content may be expanded to the central visual field due to a limitation of a size of the display device.

It may be understood that the display area and the display position of the visual anti-motion sickness content affect an anti-motion sickness effect of the visual anti-motion sickness content. In an actual process, to achieve a good anti-motion sickness effect, the display area and the display position of the visual anti-motion sickness content may be comprehensively considered.

A visual angle and a position of the display device relative to the retina of the user may be determined based on characteristics of the display device, a position height of a human eye, and a distance between the user and the display device. The characteristics of the display device include a hardware screen size of the display device, a size of display content, an actual display size of a projection picture (the display device is a projection screen layout), a central point position of the displayed content, and the like. The position height of the human eye may be perceived and estimated based on the camera and seat pressure. The distance between the user and the display device may be estimated by using the camera, or the distance between the user and the display device may be determined and obtained by detecting a distance between a seat in which the user is located and the display device, or by using a technical means such as sound wave reflection.

On the basis that the display position of the visual anti-motion sickness content is adjusted based on the visual angle and the position of the display device relative to the retina of the user, the display area of the visual anti-motion sickness content may be adjusted, to obtain a better display position and display area of the visual anti-motion sickness content, thereby achieving a better anti-motion sickness effect.

For example, a relationship between the display area of the visual anti-motion sickness content and the input data, and the visual angle and the position of the display device relative to the retina of the user may be shown in Formula (8) below, and a relationship between the display position of the visual anti-motion sickness content and the input data, and the visual angle and the position of the display device relative to the retina of the user may be shown in Formula (9) below.

$$position(x,y)=F(S/A/B) \qquad \text{Formula (8)}$$

$$area=F1(S/A/B) \qquad \text{Formula (9)}$$

In the formulas, position represents the display position of the visual anti-motion sickness content, area represents the display area of the visual anti-motion sickness content, S represents the input data (including the user characteristic, the user status, and the motion status of the vehicle), A represents a position of the display device relative to the retina of the user, and B represents a visual angle of the display device relative to the user retina.

FIG. 14 is a schematic flowchart of a display method according to an embodiment of this application. The method may be applied to the scenario shown in FIG. 1. The following specifically describes the method 1400.

S1401: Predict first information.

For example, the first information includes at least one of the following: an acceleration of an electronic device and an angular velocity of the electronic device. The electronic device may be a vehicle.

S1402: Display first content at a first moment based on the first information.

It should be noted that the first information is information at the first moment. To be specific, the electronic device may predict the first information at the first moment, and display the first content on a display device, where the first content is visual anti-motion sickness content.

It can be learned that an acceleration of a vehicle and/or an angular velocity of the vehicle at a future moment may be predicted, and visual anti-motion sickness content with a low delay or even without a delay is provided for a user, to reduce a conflict between a visual perception result and a vestibular perception result, and alleviate car sickness of the user.

Specifically, a second moment is determined based on a first delay; the first information is output at the second moment; and after the first delay, the first content is displayed at the first moment based on the first information, where the second moment is before the first moment.

It should be noted that a specific system delay exists before the electronic device finally displays the visual anti-motion sickness content to the user. The system delay includes but is not limited to time consumed for data transmission between domains carried by the electronic device, time consumed for data processing by each module, and the like. The second moment may be a new target moment shown in FIG. 6, and is a moment at which data is output. The first moment is a target moment. The first delay is the system delay. Because of existence of the system delay, when the first information is output at the second moment, the first content is displayed only after the first delay (system delay) elapses. It can be learned that, due to the system delay, the first information is output in advance, so that the visual anti-motion sickness content with a low delay or even without a delay can be provided for the user.

In an implementation, before the first information is predicted, related information further needs to be obtained.

Specifically, before the first information is predicted, second information is obtained, where the second information is information at a third moment, the third moment is before the first moment, and the second information includes at least one of the following: mass of the electronic device, an opening of a pedal of the electronic device, a speed of the electronic device, a road condition parameter, an angle of a steering wheel of the electronic device, and an angular velocity of the steering wheel of the electronic device.

It should be noted that the electronic device may predict the first information at a future first moment based on information at the third moment before the future first moment. For a specific prediction method, refer to the foregoing descriptions of FIG. 3. Details are not described herein again.

In an implementation, when the first information is the acceleration of the electronic device, the acceleration of the electronic device may be predicted based on the mass of the electronic device, the opening of the pedal of the electronic device, the speed of the electronic device, and the road condition parameter.

In an implementation, when the first information is the angular velocity of the electronic device, the angular velocity of the electronic device may be predicted based on the angle of the steering wheel of the electronic device or the angular velocity of the steering wheel of the electronic device.

For example, a torque of the vehicle may be calculated based on an opening of a pedal of the vehicle and a speed of the vehicle, and the torque of the vehicle affects power of the vehicle. Then, an acceleration of the vehicle at a moment is determined based on mass of the vehicle and a road condition parameter, and an angular velocity of the vehicle at a moment is determined based on an angular velocity of a steering wheel of the vehicle or an angular velocity of a steering wheel of the vehicle.

To achieve a better display effect of the visual anti-motion sickness content, a display manner of the visual anti-motion sickness content may be adjusted.

Specifically, before displaying the first content based on the first information, the electronic device may determine a display manner of the first content based on the first information, where the display manner of the first content includes a movement direction of the first content and a speed change characteristic of the first content.

In other words, a movement direction and a speed change characteristic of the visual anti-motion sickness content on the display device may be adjusted based on a predicted acceleration of the vehicle and/or a predicted angular velocity of the vehicle. For a specific adjustment manner, refer to the foregoing descriptions of FIG. 9. Details are not described herein again.

For example, when the acceleration of the electronic device and the angular velocity of the electronic device do not meet a preset condition, it is determined that the first content is stationary.

To be specific, as shown in the foregoing scenario 1, when the acceleration of the vehicle and the angular velocity of the vehicle are less than a first threshold, the vehicle is stationary or travels at a constant/nearly constant speed in a travel direction of the vehicle. In this case, it is determined that the visual anti-motion sickness content remains stationary. When the acceleration of the electronic device and the angular velocity of the electronic device do not meet the preset condition, the vestibular system of the user cannot perceive acceleration, deceleration, or turning of the vehicle, but the vestibular system of the user considers that the vehicle is stationary or is traveling at a constant speed. In this case, the visual anti-motion sickness content is also stationary.

For example, when the acceleration of the electronic device meets a preset condition, it is determined that the movement direction of the first content is expanding toward an edge or contracting toward a center, where the speed change characteristic of the first content is related to the acceleration of the electronic device.

To be specific, as shown in the foregoing scenario 2 and scenario 3, that the acceleration of the electronic device meets the preset condition may be understood as that the acceleration of the electronic device or an absolute value of the acceleration reaches a threshold that can be perceived by the user. This includes two cases: The vehicle accelerates, and the vehicle decelerates. When an acceleration of the vehicle during acceleration meets the preset condition, a movement direction of the visual anti-motion sickness content is expanding toward an edge; or when an acceleration of the vehicle during deceleration meets the preset condition, a movement speed of the visual anti-motion sickness content is contracting toward a center.

For example, when the angular velocity of the electronic device meets a preset condition, it is determined that the movement direction of the first content is opposite to a motion direction of the electronic device, where the speed change characteristic of the first content is related to the angular velocity of the electronic device.

To be specific, as shown in the foregoing scenario 4, that the angular velocity of the electronic device meets the preset condition may be understood as that the angular velocity of the electronic device reaches a threshold that can be perceived by the user. When the angular velocity of the electronic device meets the preset condition, the vestibular system of the user may perceive turning of the vehicle, and move to a direction opposite to a turning direction of the vehicle based on the visual anti-motion sickness content, to provide a visual prompt for the user that the vehicle is turning. In addition, as the angular velocity of the vehicle increases, a movement speed of the visual anti-motion sickness content may also increase.

Further, to enable the anti-motion sickness effect of the visual anti-motion sickness content to adapt to different users in a personalized manner, a speed change characteristic of the first content may be further adjusted, or a threshold that can be sensed by the user may be adjusted, or a display position and/or a display area of the first content may be adjusted.

Specifically, the speed change characteristic of the first content is adjusted based on a first parameter, where the first parameter includes at least one of the following: the user characteristic, the user status, and the motion status of the electronic device.

For example, the user characteristic may be understood as motion sickness susceptibility of the user, the user status may be understood as a current car sickness level of the user, and the motion status of the electronic device may be understood as a traveling speed of the vehicle. For example, when the user has high motion sickness susceptibility, a change rate of the movement speed of the visual anti-motion sickness content may be reduced; or when the current car sickness level of the user increases, a change rate of the movement speed of the visual anti-motion sickness content may be reduced.

Specifically, the preset condition is adjusted based on the first parameter, where the first parameter includes at least one of the following: the user characteristic, the user status, and the motion status of the electronic device.

For example, in case of higher motion sickness susceptibility or a higher current car sickness level of the user, a trigger threshold may be reduced. In addition, the trigger threshold may be adjusted based on the motion status of the vehicle. For example, a higher speed of the vehicle indicates a higher vibration frequency of the vehicle and a higher threshold for perceiving an acceleration of the vehicle by the user. In this case, the trigger threshold may be increased.

Specifically, a display area of the first content is determined based on either of the first parameter and a second parameter; and/or a display position of the first content is determined based on either of the first parameter and the second parameter. The first parameter includes at least one of the following: the user characteristic, the user status, and the motion status of the electronic device; and the second parameter is a relative relationship between a screen of the electronic device and a retina of the user.

It should be noted that, for a specific method for adjusting the display area of the first content and the display position of the first content, refer to the foregoing descriptions of step S206 to step S208. To avoid redundancy, details are not described herein again.

According to the display method, the display apparatus, and the electronic device provided in this application, the acceleration of the vehicle and the angular velocity of the vehicle are determined through prediction with a low delay or even without a delay, and visual anti-motion sickness content that matches the acceleration of the vehicle and/or the angular velocity of the vehicle is provided on the display device of the vehicle with reference to information such as the user status, the user characteristic, and the motion status of the vehicle, to reduce the conflict between the visual perception result and the vestibular perception result, and alleviate car sickness of the user.

The display methods provided in embodiments of this application are described above in detail with reference to FIG. 1 to FIG. 14. In embodiments of this application, unless otherwise specified or a logic conflict occurs, terms and/or descriptions in embodiments are consistent and may be mutually referenced, and technical features in different embodiments may be combined into a new embodiment based on an internal logical relationship between the technical features.

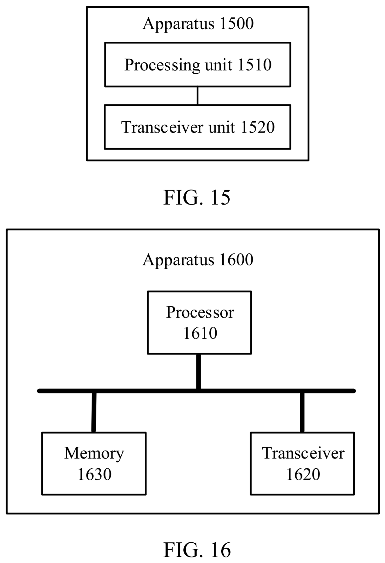

Apparatuses provided in embodiments of this application are described below in detail with reference to FIG. 15 and FIG. 16. It should be understood that descriptions of apparatus embodiments correspond to the descriptions of the method embodiments. Therefore, for content that is not described in detail, refer to the method embodiments. For brevity, details are not described herein again.

FIG. 15 is a block diagram of an apparatus 1500 according to an embodiment of this application. The apparatus 1500 may include units configured to perform the display method in FIG. 14.

Specifically, the apparatus 1500 includes a processing unit 1510 and a transceiver unit 1520.

Optionally, the apparatus 1500 further includes a storage unit. The storage unit may be configured to store instructions and/or data. The processing unit 1510 may read the instructions and/or the data in the storage unit, to cause the apparatus to implement related actions performed by the electronic device in the foregoing method embodiments.

The apparatus 1500 may be configured to perform actions performed by the electronic device in the foregoing method embodiments. In this case, the apparatus 1500 may be a component of the electronic device. For example, the apparatus 1500 may be a chip or an integrated circuit in the electronic device. The processing unit 1510 is configured to perform a processing-related operation on the electronic device in the foregoing method embodiments, and the transceiver unit 1520 is configured to perform a receiving and sending-related operation on the electronic device in the foregoing method embodiments.

It should be understood that a specific process in which the units perform the foregoing corresponding steps is described in detail in the foregoing method embodiments, and for brevity, details are not described herein.

In a specific implementation, actions performed by the processing unit 1510 and the transceiver unit 1520 may be implemented by one processor, or may be implemented by a plurality of processors.

FIG. 16 is another block diagram of an apparatus according to an embodiment of this application. The apparatus 1600 shown in FIG. 16 may include a processor 1610, a transceiver 1620, and a memory 1630. The processor 1610, the transceiver 1620, and the memory 1630 are connected through an internal connection path. The memory 1630 is configured to store instructions. The processor 1610 is configured to execute the instructions stored in the memory 1630, to implement the methods in the foregoing embodiments. Optionally, the memory 1630 may be coupled to the processor 1610 through an interface, or integrated with the processor 1610.

It should be noted that the transceiver 1620 may include but is not limited to a transceiver apparatus such as an input/output interface (input/output interface), to implement communication between the apparatus 1600 and another device or a communication network.

The memory 1630 may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

The transceiver 1620 uses, for example, but is not limited to, a transceiver apparatus of a transceiver type, to implement communication between the apparatus 1600 and another device or a communication network, to receive/send data/information used to implement the methods in the foregoing embodiments.

The apparatus 1600 may be a chip or a circuit disposed in the foregoing electronic device.

An embodiment of this application further provides a computer program product. The computer program product includes computer program code. When the computer program code is run on a computer, the computer is caused to implement the methods in the foregoing embodiments of this application.

An embodiment of this application further provides a computer-readable storage medium. The computer-readable medium stores computer instructions. When the computer instructions are run on a computer, the computer is caused to implement the methods in the foregoing embodiments of this application.

An embodiment of this application further provides a chip, including a circuit, configured to perform the methods in the foregoing embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In descriptions of embodiments of this application, unless otherwise specified, "/" means "or". For example, A/B may indicate A or B. In this specification, "and/or" describes only an association relationship between associated objects and indicates that three relationships may exist. For example, A and/or B may indicate the following three cases: Only A exists, both A and B exist, and only B exists. In this application, "at least one" means one or more, and "a plurality of" means two or more. "At least one of the following items (pieces)" or a similar expression thereof means any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In embodiments of this application, prefix words such as "first" and "second" are used only to distinguish different described objects, and do not limit positions, a sequence, priorities, quantities, content, or the like of the described objects. In embodiments of this application, use of a prefix word, for example, an ordinal number, used to distinguish between described objects does not constitute a limitation on the described objects. For descriptions of the described objects, refer to the descriptions of the context in the claims or embodiments. The use of such a prefix word should not constitute a redundant limitation.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

In embodiments of this application, unless otherwise specified or a logic conflict occurs, terms and/or descriptions in embodiments are consistent and may be mutually referenced, and technical features in different embodiments may be combined into a new embodiment based on an internal logical relationship between the technical features.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A display method, wherein the method is applied to an electronic device and comprises:
   predicting first information, wherein the first information is information at a first moment, and the first information comprises at least one of the following:

   an acceleration of the electronic device and an angular velocity of the electronic device; and
   displaying first content at the first moment based on the first information.

2. The method according to claim 1, wherein displaying the first content at the first moment based on the first information comprises:

   determining a second moment based on a first delay;
   outputting the first information at the second moment; and
   after the first delay, displaying the first content at the first moment based on the first information, wherein the second moment is before the first moment.

3. The method according to claim 1 or 2, wherein before predicting the first information, the method further comprises:
   obtaining second information, wherein the second information is information at a third moment, the third moment is before the first moment, and the second information comprises at least one of the following:
   mass of the electronic device, an opening of a pedal of the electronic device, a speed of the electronic device, a road condition parameter, an angle of a steering wheel of the electronic device, and an angular velocity of the steering wheel of the electronic device.

4. The method according to claim 3, wherein when the first information is the acceleration of the electronic device, predicting the first information comprises:
   predicting the acceleration of the electronic device based on the mass of the electronic device, the opening of the pedal of the electronic device, the speed of the electronic device, and the road condition parameter.

5. The method according to claim 3 or 4, wherein when the first information is the angular velocity of the electronic device, predicting the first information comprises:
   predicting the angular velocity of the electronic device based on the angle of the steering wheel of the electronic device or the angular velocity of the steering wheel of the electronic device.

6. The method according to any one of claims 1 to 5, wherein before displaying the first content based on the first information, the method further comprises:
   determining a display manner of the first content based on the first information, wherein the display manner of the first content comprises:

a movement direction of the first content and a speed change characteristic of the first content.

7. The method according to claim 6, wherein determining the display manner of the first content based on the first information comprises:
when the acceleration of the electronic device and the angular velocity of the electronic device do not meet a preset condition, determining that the first content is stationary.

8. The method according to claim 6, wherein determining the display manner of the first content based on the first information comprises:
when the acceleration of the electronic device meets a preset condition, determining that the movement direction of the first content is expanding toward an edge or contracting toward a center, wherein the speed change characteristic of the first content is related to the acceleration of the electronic device.

9. The method according to claim 6, wherein determining the display manner of the first content based on the first information comprises:
when the angular velocity of the electronic device meets a preset condition, determining that the movement direction of the first content is opposite to a motion direction of the electronic device, wherein the speed change characteristic of the first content is related to the angular velocity of the electronic device.

10. The method according to any one of claims 6 to 9, wherein the method further comprises:
adjusting the speed change characteristic of the first content based on a first parameter, wherein the first parameter comprises at least one of the following:
a user characteristic, a user status, and a motion status of the electronic device.

11. The method according to any one of claims 6 to 10, wherein the method further comprises:
adjusting the preset condition based on the first parameter, wherein the first parameter comprises at least one of the following:
the user characteristic, the user status, and the motion status of the electronic device.

12. The method according to any one of claims 1 to 11, wherein before displaying the first content based on the first information, the method further comprises:

determining a display area of the first content based on either of the first parameter and a second parameter; and/or
determining a display position of the first content based on either of the first parameter and the second parameter, wherein
the first parameter comprises at least one of the following:

the user characteristic, the user status, and the motion status of the electronic device; and
the second parameter is a relative relationship between a screen of the electronic device and a retina of a user.

13. A display apparatus, wherein the display apparatus comprises a unit configured to perform the method according to any one of claims 1 to 12.

14. An electronic device, wherein the electronic device is configured to perform the method according to any one of claims 1 to 12.

15. A display apparatus, comprising a processor coupled to a memory, wherein the memory is configured to store a computer program, and the processor is configured to run the computer program, to cause the display apparatus to perform the method according to any one of claims 1 to 12.

16. The display apparatus according to claim 15, further comprising one or both of the memory and a transceiver, and the transceiver is configured to receive a signal and/or send a signal.

17. A computer-readable storage medium, wherein the computer-readable storage medium stores a computer program, and when the computer program is executed by a computer, the computer is caused to implement the method according to any one of claims 1 to 12.

**18.** A computer program product comprising instructions, wherein when the computer program product runs on a computer, the computer is caused to perform the method according to any one of claims 1 to 12.

**19.** A chip, wherein the chip comprises a processor and a data interface, and the processor reads, through the data interface, instructions stored in a memory, to perform the method according to any one of claims 1 to 12.

Central control screen

Front passenger screen

Rear passenger screen

Vehicle

FIG. 1

S201: Obtain vehicle information at a moment T1

S202: Predict an acceleration of a vehicle and an angular velocity of the vehicle at a moment T2

S203: Determine an acceleration of the vehicle and an angular velocity of the vehicle at a moment T3

S206: Adjust the trigger threshold

S204: When either of the acceleration of the vehicle and the angular velocity of the vehicle at the moment T3 is greater than or equal to a trigger threshold, determine a display manner based on the acceleration of the vehicle and the angular velocity of the vehicle

S207: Adjust a display area of the visual anti-motion sickness content

S208: Adjust a display position of the visual anti-motion sickness content

S205: Display visual anti-motion sickness content

FIG. 2

S301: Calculate a torque of a vehicle based on an opening of a pedal and a speed of the vehicle

S302: Predict an acceleration of the vehicle at t–ahead1 based on a vehicle parameter and a road condition parameter

S303: Perform angle correction based on duration and an angle of a steering wheel or an angular velocity of a steering wheel, and predict an angular velocity of the vehicle at t–ahead2

S304: Store motion information of the vehicle, perform time synchronization, and output the motion information of the vehicle

S305: Display visual anti-motion sickness content based on the acceleration of the vehicle and the angular velocity of the vehicle

FIG. 3

S401: A driver operates a vehicle

S402: A power system of the vehicle responds to the operation of the driver

S403: Sense that the vehicle is in motion

FIG. 4

t1    t2            t3

Acceleration moment
of a vehicle

Angular velocity
moment of the vehicle

Motion information
output moment of the
vehicle

Target
moment

FIG. 5

t1    t2            t3

Acceleration moment
of a vehicle

Angular velocity
moment of the vehicle

Motion information
output moment of the
vehicle

$t_{delay}$

Motion information
output moment of the
vehicle that takes a
system delay into
account

New target          Target
moment              moment

FIG. 6

FIG. 7

(a)

(b)

Vertical lines

Wire frames

Combination of a
plurality of patterns

Particles

(c)

FIG. 8

S901: Obtain an acceleration of a vehicle and an angular velocity of the vehicle

S902: Determine that the acceleration of the vehicle and the angular velocity of the vehicle are less than a first threshold

S904: Determine that the acceleration of the vehicle is greater than or equal to a second threshold

S906: Determine that an absolute value of the acceleration of the vehicle is greater than or equal to an absolute value of a third threshold

S908: Determine that the angular velocity of the vehicle is greater than or equal to a fourth threshold

S903: Determine that visual anti-motion sickness content is stationary

S905: Determine that visual anti-motion sickness content expands toward an edge

S907: Determine that visual anti-motion sickness content contracts toward a center

S909: Determine that visual anti-motion sickness content moves in an opposite direction to turning of the vehicle

FIG. 9

Stationary/Travel at a nearly constant speed

Travel direction of a vehicle

FIG. 10

Accelerating

**FIG. 11**

Decelerating

**FIG. 12**

Vehicle turning

**FIG. 13**

| S1401: Predict first information |
| --- |

↓

| S1402: Display first content at a first moment based on the first information |
| --- |

**FIG. 14**

Apparatus 1500

Processing unit 1510

Transceiver unit 1520

FIG. 15

Apparatus 1600

Processor
1610

Memory
1630

Transceiver
1620

FIG. 16

# EP 4 708 022 A1

## INTERNATIONAL SEARCH REPORT

| | International application No. |
|---|---|
| | **PCT/CN2025/077736** |

### A. CLASSIFICATION OF SUBJECT MATTER

G06F3/14(2006.01)i

According to International Patent Classification (IPC) or to both national classification and IPC

### B. FIELDS SEARCHED

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNABS, CNTXT, CNKI, VEN, USTXT, EPTXT, WOTXT, IEEE: 晕动症, 晕车, 车辆, 汽车, 显示, 调整, 时刻, 预测, 延时, 时延, 角速度, 加速度, 踏板, 方向盘, motion sickness, vehicle, car, display, adjustment, time, predict, delay, angular velocity, acceleration, footboard, brake, steering wheel

### C. DOCUMENTS CONSIDERED TO BE RELEVANT

| Category* | Citation of document, with indication, where appropriate, of the relevant passages | Relevant to claim No. |
|---|---|---|
| X | CN 112654959 A (HUAWEI TECHNOLOGIES CO., LTD.) 13 April 2021 (2021-04-13) description, paragraphs 98-154, and claims 1-14 | 1-19 |
| A | CN 116954534 A (HUAWEI TECHNOLOGIES CO., LTD.) 27 October 2023 (2023-10-27) entire document | 1-19 |
| A | CN 114494430 A (BEIJING CO WHEELS TECHNOLOGY CO., LTD.) 13 May 2022 (2022-05-13) entire document | 1-19 |
| A | CN 116039652 A (GUANGDONG OPPO MOBILE TELECOMMUNICATIONS CORP., LTD.) 02 May 2023 (2023-05-02) entire document | 1-19 |
| A | CN 117523139 A (APPOTRONICS CORP., LTD.) 06 February 2024 (2024-02-06) entire document | 1-19 |
| A | US 2004217976 A1 (SANFORD, William C.) 04 November 2004 (2004-11-04) entire document | 1-19 |

☐ Further documents are listed in the continuation of Box C. ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **14 May 2025** | **20 May 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

34

**INTERNATIONAL SEARCH REPORT**
Information on patent family members

International application No.

**PCT/CN2025/077736**

| Patent document cited in search report | | | Publication date (day/month/year) | Patent family member(s) | | | Publication date (day/month/year) |
|---|---|---|---|---|---|---|---|
| CN | 112654959 | A | 13 April 2021 | WO | 2022016444 | A1 | 27 January 2022 |
| | | | | KR | 20230041751 | A | 24 March 2023 |
| | | | | EP | 4180272 | A1 | 17 May 2023 |
| | | | | US | 2023153942 | A1 | 18 May 2023 |
| CN | 116954534 | A | 27 October 2023 | None | | | |
| CN | 114494430 | A | 13 May 2022 | None | | | |
| CN | 116039652 | A | 02 May 2023 | None | | | |
| CN | 117523139 | A | 06 February 2024 | None | | | |
| US | 2004217976 | A1 | 04 November 2004 | US | 2006232497 | A1 | 19 October 2006 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410192130